# EUROPEAN PATENT APPLICATION

(11) **EP 4 541 970 A1**
(43) Date of publication of application: **23.04.2025**
(21) Application number: 24204064.0
(22) Date of filing: 01.10.2024
(51) Int. Cl.: E02F 3/42, F16D 3/00, F16F 15/12

(54) **DRIVE DEVICE, WORK MACHINE**

(30) Priority: 16.10.2023 JP 2023178523; 16.07.2024 JP 2024113255
(71) Applicant: Yanmar Holdings Co., Ltd., Osaka-shi, Osaka (JP)
(72) Inventor: SAIKI, Miyuki, Osaka (JP); HIRAMATSU, Toshifumi, Osaka (JP); TERASHIMA, Jun, Fukuoka (JP)
(74) Representative: Novagraaf International SA

(57) **Abstract**

[Problem] To easily attach and remove a buffer device of a drive device.

[Solution] A drive device 500 for rotationally moving a drive target M2 includes a motor portion 1, a speed reducer 2 for reducing a torque input from the motor portion 1, and a buffer device 3 for outputting the torque input from the speed reducer 2 to the drive target M2 via an elastic portion 33. At least a part of the buffer device 3 is disposed on a side opposite to the motor portion 1 and the speed reducer 2 with the drive target M2 interposed therebetween.

## Description

### TECHNICAL FIELD

The present invention relates to a drive device and a work machine.

### BACKGROUND ART

Conventionally, a series elastic actuator (SEA) which is attached to a joint portion of a work machine and performs precise rotational driving is known. In a conventional SEA, a spring unit is mounted between a speed reducer and the joint portion for force control and shock absorption. This is because there is a risk that a motor, the speed reducer or the like is damaged when an unexpected external force is applied to the motor, the speed reducer, or the like from an output side.

Note that, as an example of the conventional art related to the present invention, Patent Document 1 discloses an actuator in which a motor, a speed reducer, an elastic spring device, and a load are connected in this order.

### PRIOR ART DOCUMENT

### PATENT DOCUMENT

Patent Document 1: Japanese Unexamined Patent Publication No. 2014-140300

### SUMMARY OF INVENTION

### TECHNICAL PROBLEM

However, the performance of the SEA is restricted by spring characteristics (spring constant and the like) of an elastic element mounted thereon. Therefore, it is necessary to replace the elastic element depending on the situation. However, if the elastic element is disposed between the speed reducer and the joint portion, it takes labor to attach and to remove the elastic element, which is troublesome.

In view of the above-described circumstances, an object of the present invention is to facilitate attachment and removal of a buffer device of a drive device.

### SOLUTION TO PROBLEM

In order to achieve the above-described object, a drive device according to an aspect of the present invention rotates a drive target. The drive device includes a motor portion, a speed reducer, and a buffer device. The speed reducer reduces a torque input from the motor portion. The buffer device outputs the torque input from the speed reducer to the drive target from an output end part via an elastic portion. At least a part of the buffer device is disposed on a side opposite to the motor portion and the speed reducer with the drive target interposed therebetween.

In order to achieve the above-described object, a drive device according to another aspect of the present invention rotationally moves a drive target. The drive device includes a motor portion, a speed reducer, and a buffer device. The speed reducer reduces a torque input from the motor portion. The buffer device outputs the torque input from the speed reducer to the drive target from an output end part via an elastic portion. The buffer device is disposed inside a through hole disposed in the drive target.

In order to achieve the above-described object, a drive device according to another aspect of the present invention rotationally moves a drive target. The drive device includes a motor portion, a buffer device, and a first speed reducer. The buffer device outputs a torque of the motor portion from an output end part via an elastic portion. The first speed reducer reduces a torque input from the buffer device. The buffer device is disposed between the motor portion and the first speed reducer. The output end part of the buffer device is connected to the first speed reducer. The first output shaft of the first speed reducer is connected to the drive target.

In addition, in order to achieve the above-described object, a work machine according to one aspect of the present invention is configured to include any one of the above-described drive devices.

Further features and advantages of the present invention will become more apparent from the following embodiments.

### ADVANTAGEOUS EFFECTS OF INVENTION

According to the present invention, the buffer device of the drive device can be easily attached and removed.

### BRIEF DESCRIPTION OF DRAWINGS

FIG. 1 is a left side view illustrating an example of the excavator according to this embodiment;
FIG. 2 is an appearance view of an example of a SEA according to a first embodiment;
FIG. 3 is a sectional view of the SEA viewed from one of a rotation axis;
FIG. 4 is a conceptual diagram of a first configuration example of the SEA according to the first embodiment;
FIG. 5 is a conceptual diagram of a second configuration example of the SEA according to the first embodiment;
FIG. 6 is a conceptual diagram of a third first configuration example of the SEA according to the first embodiment;
FIG. 7 is a conceptual diagram of a fourth configuration example of the SEA according to the first embodiment;
FIG. 8 is a conceptual diagram of a fifth configuration example of the SEA according to the first embodiment;
FIG. 9 is a conceptual diagram of a sixth configuration example of the SEA according to the first embodiment;
FIG. 10A is a conceptual diagram of a seventh configuration example of the SEA according to a variation of the first embodiment;
FIG. 10B is a conceptual diagram of an eighth configuration example of the SEA according to the variation of the first embodiment;
FIG. 11 is a conceptual diagram of a ninth configuration example of the SEA according to a second embodiment;
FIG. 12 is a conceptual diagram of a tenth configuration example of the SEA according to the second embodiment;
FIG. 13 is a conceptual diagram of an eleventh configuration example of the SEA according to the second embodiment;
FIG. 14 is a conceptual diagram of a twelfth configuration example of the SEA according to the second embodiment;
FIG. 15 is a conceptual diagram of a thirteenth configuration example of the SEA according to a variation of the second embodiment;
FIG. 16 is a conceptual diagram of a fourteenth configuration example of the SEA according to a third embodiment;
FIG. 17A is a sectional view illustrating a configuration example of a buffer device according to a fourth embodiment;
FIG. 17B is a sectional view illustrating another configuration example of the buffer device according to the fourth embodiment;
FIG. 18A is a schematic diagram illustrating a first disposition example of a force control mechanism according to a variation of a fifth embodiment;
FIG. 18B is a schematic diagram illustrating a second disposition example of the force control mechanism according to the variation of the fifth embodiment;
FIG. 18C is a schematic diagram illustrating a third disposition example of the force control mechanism according to the variation of the fifth embodiment;
FIG. 19 is a schematic diagram illustrating a disposition example of the force control mechanism and a load measurement mechanism according to another variation of the fifth embodiment;
FIG. 20 is a block diagram illustrating an example of a reaction force control of a control portion;
FIG. 21 is a flowchart showing an example of switching of a control mode; and
FIG. 22 is a left side view illustrating a configuration example of an excavator according to a sixth embodiment.

### DESCRIPTION OF EMBODIMENTS

In the following, embodiments of the present invention will be explained with reference to the drawings.

### 1. First Embodiment

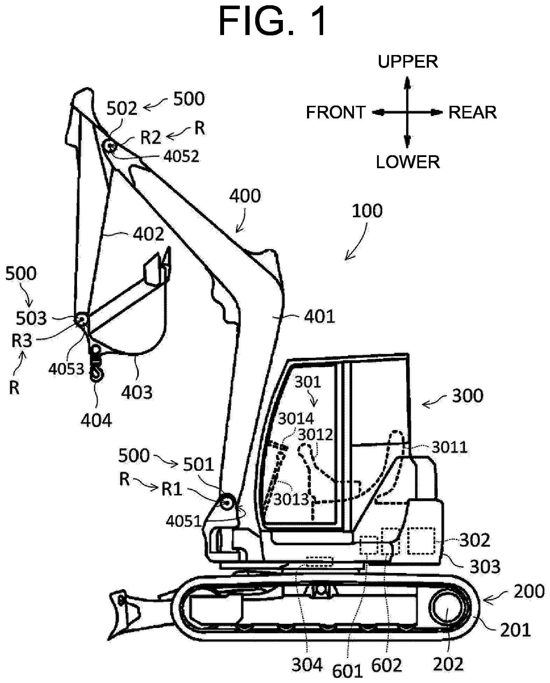

First, a schematic structure of an excavator 100 as an example of a work machine will be explained with reference to FIG. 1. FIG. 1 is a left side view illustrating an example of the excavator 100 according to this embodiment.

### 1-1. Mechanical Configuration Example

The excavator 100 includes a lower traveling body 200, an upper revolving body 300, an operating machine 400, and a series elastic actuator (SEA) 500. Note that the SEA 500 is an example of the "drive device" in the present invention and includes a boom SEA 501, an arm SEA 502, and a bucket SEA 503. Hereinafter, they are collectively referred to simply as "SEA 500" in some cases. That is, the excavator 100 includes the SEA 500.

The lower traveling body 200 is driven by receiving power from a motor 302 incorporated in the upper revolving body 300 and causes the excavator 100 to travel. The lower traveling body 200 enables forward and backward movement of the excavator 100 by driving each of right and left crawlers 201 by right and left traveling motors 202. The upper revolving body 300 is mounted on an upper part of the lower traveling body 200 and is constituted capable of revolution with respect to the lower traveling body 200 via a revolving bearing (not shown).

In the upper revolving body 300, an operation portion 301, a motor 302, a revolving base 303, a revolving motor 304 and the like are disposed. The upper revolving body 300 revolves via the revolving bearing by a drive force of the revolving motor 304.

An operation seat 3011 is disposed in the operation portion 301. A pair of work operation levers 3012 are disposed on the right and left of the operation seat 3011. A pair of traveling levers 3013 and an operation panel 3014 are disposed in front of the operation seat 3011. On the operation panel 3014, a display portion and an operation button are disposed. The display portion displays an image for notifying an operator of a state of the excavator 100 and the like. The operator is seated on the operation seat 3011 and executes control of each actuator and the like by operating the work operation levers 3012, the traveling levers 3013, the operation panel 3014 and the like so as to perform traveling, revolving, working and the like.

The operating machine 400 is mounted on the upper revolving body 300 so as to be capable of swing in an up-down direction. The operating machine 400 is driven by receiving a power from the motor 302 and performs actual works such as excavating of soil and sand and the like. The operating machine 400 includes a boom 401, an arm 402, and a bucket 403. The operating machine 400 enables the above-described works by independently driving them.

A base end part of the boom 401 is supported capable of swing around a rotation axis R1 with respect to a front part of the upper revolving body 300. Note that the rotation axis R1 passes through a swing center of a connection portion between the base end part of the boom 401 and a front part of the upper revolving body 300 and extends in the right-left when viewed from the operator. Hereinafter, the connection portion is referred to as a first joint portion 4051. The boom SEA 501 is disposed at the first joint portion 4051. The boom SEA 501 drives the boom 401 capable of swing in the up-down direction with respect to the front part of the upper revolving body 300.

A base end part of the arm 402 is supported capable of swing around a rotation axis R2 with respect to a distal end part of the boom 401. Note that the rotation axis R2 passes through the swing center of a connection portion between the base end part of the arm 402 and the distal end part of the boom 401 and extends in the right-left when viewed from the operator. Hereinafter, the connection portion is referred to as a second joint portion 4052. The arm SEA 502 is disposed at the second joint portion 4052. The arm SEA 502 drives the arm 402 capable of swing in the up-down direction with respect to the distal end part of the boom 401.

The bucket 403 is supported capable of swing around a rotation axis R3 with respect to the distal end part of the arm 402. Note that the rotation axis R3 passes through the swing center of a connection portion between the bucket 403 and the distal end part of the arm 402 and extends in the right-left direction when viewed from the operator. Hereinafter, the connection portion is referred to as a third joint portion 4053. The bucket SEA 503 is disposed at the third joint portion 4053. The bucket SEA 503 drives the bucket 403 capable of swing in the up-down direction with respect to the distal end part of the arm 402.

Note that, hereinafter, each of the rotation axes R1, R2, and R3 is collectively referred to as a "rotation axis R" in some cases. In addition, the first joint portion 4051 to the third joint portion 4053 are collectively referred to simply as a "joint portion 405" in some cases.

In addition, the excavator 100 further includes a storage portion 601 and a control portion 602. The storage portion 601 is a non-transitory storage medium that retains memory even when electric power supply is stopped. The storage portion 601 stores information, programs and the like used in the control portion 602 and the like. The control portion 602 controls each portion of the excavator 100 on the basis of the information, the program and the like stored in the storage portion 601, receives an operation input of the operation portion 301 and the like, for example, and instructs driving of the motor 302, the SEA 500 and the like. In addition, the control portion 602 feedback-controls the drive of the SEA 500 on the basis of a detection result of a sensor 4, which will be described later, a speed reduction ratio of a speed reducer 2 and the like. Note that, the control of the operating machine 400 of the excavator 100 and the drive control of the SEA 500 may be executed by a single unit of the control portion 602 or may be executed by separate control devices constituting the control portion 602, respectively.

### 1-3. Configuration Example of SEA 500

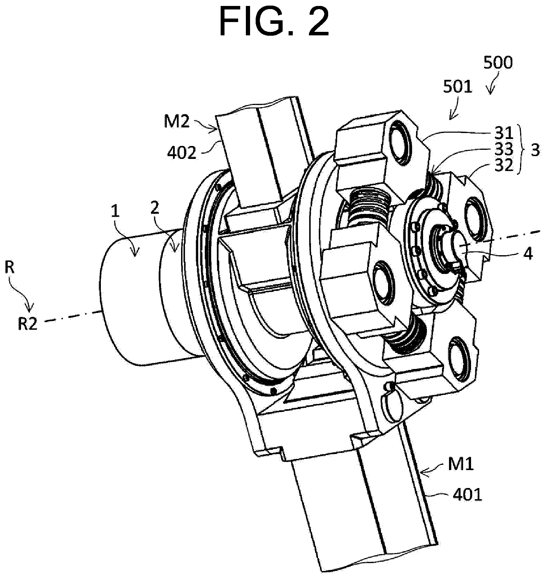

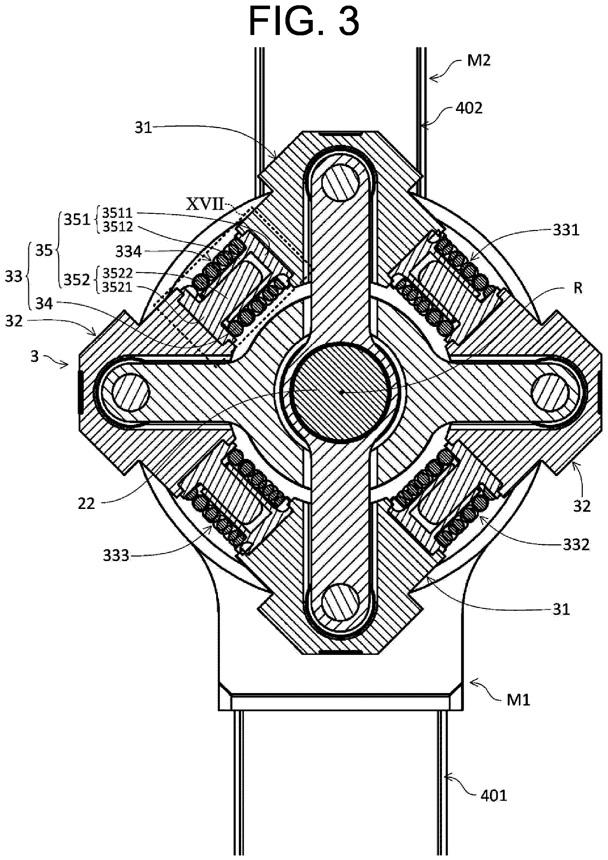

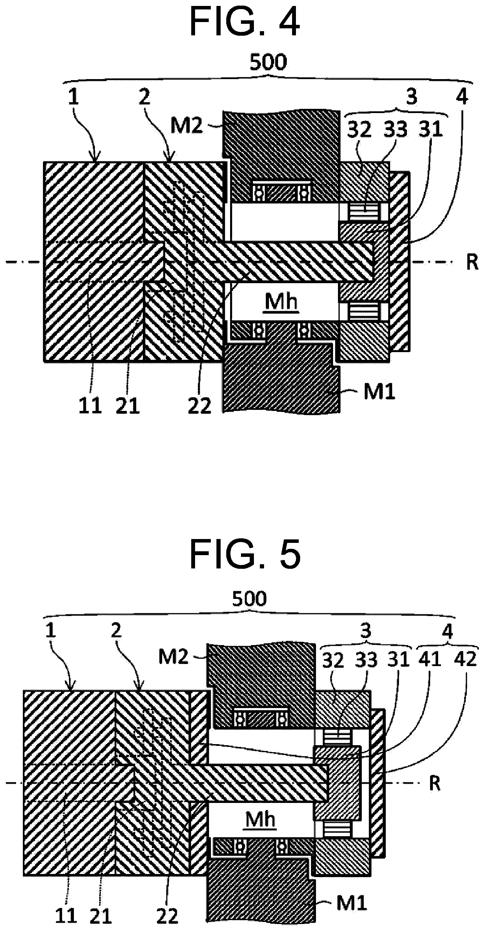

Subsequently, a configuration example of the SEA 500 will be described with reference to FIG. 2 to FIG. 9. FIG. 2 is an appearance view illustrating an example of the SEA 500 according to a first embodiment. FIG. 3 is a sectional view of the SEA 500 viewed from one side of the rotation axis R. FIG. 4 to FIG. 9 are conceptual diagrams illustrating first to sixth configuration examples of the SEA 500 according to the first embodiment.

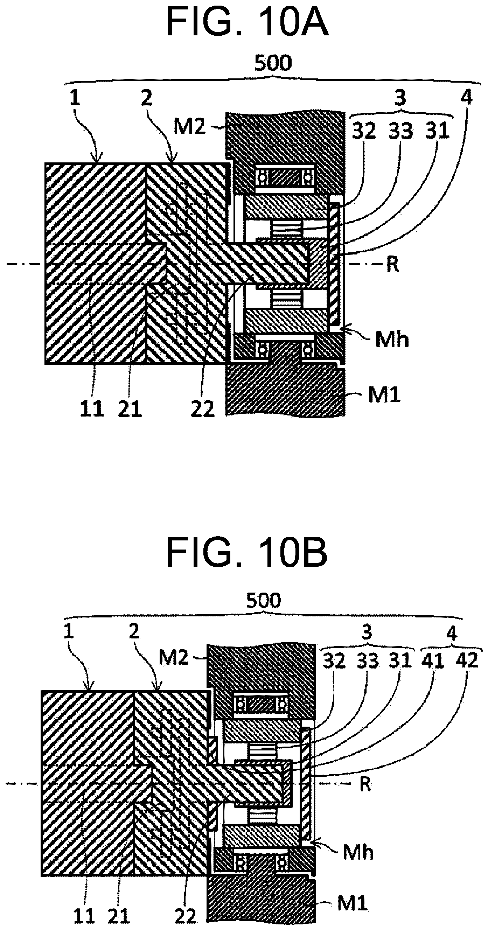

In addition, FIG. 2 to FIG. 9 explain the arm SEA 502 as an example of the SEA 500. Therefore, in FIG. 2 to FIG. 9 (and FIG. 10 to FIG. 16 to be described later), the distal end part of the boom 401 is given a sign M1 as an example of a "first member" of the present invention, and the base end part of the arm 402 is given a sign M2 as an example of a "second member" of the present invention. Note that the configuration of the other SEA 500 (the boom SEA 501 and the bucket SEA 503, for example) is similar to the configuration of the arm SEA 502. In the case of the boom SEA 501, the front part of the upper revolving body 300 corresponds to the "first member (M1)" of the present invention, and the base end part of the boom 401 corresponds to the "second member (M2)" of the present invention. In addition, in the case of the bucket SEA 503, the distal end part of the arm 402 corresponds to the "first member (M1)" of the present invention, and the bucket 403 corresponds to the "second member (M2)" of the present invention.

The SEA 500 is disposed at a connection portion between the first member M1 and the second member M2 rotatably connected to the first member M1. The second member M2 is a drive target of the SEA 500. The SEA 500 is a drive device which rotationally moves the second member M2 (that is, a drive target), and outputs a torque for rotationally moving the second member M2 with respect to the first member M1 to the second member M2. The SEA 500 includes a motor portion 1, the speed reducer 2, and a buffer device 3. The motor portion 1, the speed reducer 2, the buffer device 3, and the connection portion between the first member M1 and the second member M2 are aligned in an axial direction in which the rotation axis R extends. However, an order of the alignment is not limited to the above-described order.

The motor portion 1 generates the above-described torque and outputs the torque from a motor output shaft 11. The motor portion 1 is an electric motor in this embodiment, is drive-controlled by the control portion 602, and is driven by receiving electric power supplied from a battery (not shown).

The speed reducer 2 reduces the torque input from the motor portion 1. For example, the speed reducer 2 reduces the torque input to an input shaft 21 at a predetermined speed reduction ratio and outputs the torque from an output shaft 22. The speed reducer 2 is not particularly limited. As the speed reducer 2, for example, a parallel-shaft type speed reducer, a worm-gear speed reducer, a bevel-gear speed reducer, a planetary speed reducer, a wave-gear speed reducer, or the like is adopted.

The buffer device 3 has an input end part 31 into which a torque is input, an output end part 32 which outputs a torque, an elastic portion 33, and a stopper 34. The input end part 31 and the output end part 32 are rotatable around the rotation axis R of the second member M2 (that is, the drive target). The elastic portion 33 is disposed between and connects the input end part 31 and the output end part 32. Note that, in this embodiment, four elastic portions 331, 332, 333, 334 are disposed. Hereinafter, they are collectively referred to as the "elastic portion 33" in some cases.

The elastic portion 33 is disposed between the input end part 31 and the output end part 32 adjacent to each other in a circumferential direction with respect to the rotation axis R. That is, one circumferential end part of the elastic portion 33 is fixed to the input end part 31. The other circumferential end part of the elastic portion 33 is fixed to the output end part 32. The buffer device 3 outputs the torque input from the speed reducer 2 to the second member M2 (that is, the drive target) from the output end part 32 via the elastic portion 33.

For example, as shown in FIG. 3, the elastic portion 33 includes an elastic member 34 and a stopper 35.

The elastic member 34 has high elasticity and is stretchable in a direction De from one of the input end part 31 and the output end part 32 to the other. Note that, hereinafter, in the above-described direction De, a direction from the input end part 31 toward the output end part 32 is referred to as a "direction De1", and a direction from the output end part 32 toward the input end part 31 is referred to as a "direction De2". The elastic member 34 is a spring coil in this embodiment. However, the elastic member 34 is not limited to this example but may be a member other than the spring coil such as an elastic body including a resin material such as rubber or elastomer, for example. In addition, in this embodiment, the elastic member 34 has a cylindrical shape extending in the direction De. However, the elastic member 34 is not limited to this example but may be a solid and columnar elastic body extending in the direction De.

The stopper 35 limits contraction of the elastic member 34 in the direction De. In this embodiment, the stopper 35 has a first stopper 351 and a second stopper 352.

The first stopper 351 is disposed at the input end part 31. The first stopper 351 includes a first base body 3511 and a first restraining portion 3512. The first base body 3511 is disposed on a surface of the input end part 31 opposing the output end part 32 in the direction De and extends in a direction intersecting the direction De. The first restraining portion 3512 extends in the direction De2. That is, a base portion (an end part on a direction De1 side) of the first restraining portion 3512 is connected to the first base body 3511.

A distal end part (an end part on a direction De2 side) of the first restraining portion 3512 is opposed to a second base body 3521, which will be described later, of the second stopper 352 in the direction De with an interval therebetween. As a result, the first stopper 351 can restrict excessive contraction of the elastic member 34 in the direction De. Therefore, a risk of deterioration and damage caused by excessive contraction of the elastic member 34 is suppressed. Thus, a life of the elastic member 34 can be prolonged.

Furthermore, the above-described interval is larger than a limit value of the contraction length in the direction De of the elastic member 34, and in this embodiment, it is larger than the total sum of the intervals between adjacent turns in the direction De of the spring coil (corresponding to the above-described limit value). As a result, the first stopper 351 can prevent a risk of deterioration and damage caused by the excessive contraction of the elastic member 34. For example, in this embodiment, the first stopper 351 can prevent turns of the spring coil adjacent in the direction De from abutting and pressing against each other, that is, can prevent the spring coil from being crushed in the direction De. Thus, a life of the elastic member 34 can be prolonged more reliably.

The second stopper 352 is disposed at the output end part 32. The second stopper 352 includes a second base body 3521 and a second restraining portion 3522. The second base body 3521 is disposed on a surface of the output end part 32 opposing the input end part 31 in the direction De and extends in a direction intersecting the direction De. The second restraining portion 3522 extends in the direction De1. That is, a base portion (an end part on a direction De2 side) of the second restraining portion 3522 is connected to the second base body 3521.

A distal end part (an end part on the direction De1 side) of the second restraining portion 3522 is opposed to the first base body 3511 of the first stopper 351 in the direction De with an interval therebetween. As a result, the second stopper 352 can restrict excessive contraction of the elastic member 34 in the direction De. Therefore, a risk of deterioration and damage caused by excessive contraction of the elastic member 34 is suppressed. Thus, a life of the elastic member 34 can be prolonged.

Furthermore, the above-described interval is larger than a limit value of the contraction length in the direction De of the elastic member 34, and in this embodiment, it is larger than the total sum of the intervals between adjacent turns in the direction De of the spring coil (corresponding to the above-described limit value). As a result, the second stopper 352 can prevent a risk of deterioration and damage caused by the excessive contraction of the elastic member 34. For example, in this embodiment, the second stopper 352 can prevent turns of the spring coil adjacent in the direction De from abutting and pressing against each other, that is, can prevent the spring coil from being crushed in the direction De. Thus, a life of the elastic member 34 can be prolonged more reliably.

Note that, in this embodiment, the first restraining portion 3512 and the second restraining portion 3522 are disposed on an inner side of the elastic member 34. However, this exemplification is not limiting, and at least either one of the first restraining portion 3512 and the second restraining portion 3522 may be disposed on an outer side of the elastic member 34 or may surround the elastic member 34.

Furthermore, in this embodiment, the first restraining portion 3512 has a cylindrical shape that extends in the direction De and surrounds the second restraining portion 3522 and is disposed on the outer side of the second restraining portion 3522. Furthermore, the second restraining portion 3522 has a columnar shape extending in the direction De. However, this exemplification is not limiting, and the second restraining portion 3522 may have a cylindrical shape extending in the direction De and surrounding the first restraining portion 3512 and be disposed on an outer side of the first restraining portion 3512. At this time, the first restraining portion 3512 extending in the direction De may have a cylindrical shape or may have a columnar shape.

Furthermore, the exemplification of this embodiment does not exclude a configuration in which the stopper 35 does not include the first stopper 351 and the second stopper 352. That is, either one of the first stopper 351 and the second stopper 352 may be omitted.

In response to the rotation of the output shaft 22 of the speed reducer 2, the input end part 31 rotates around the rotation axis R. As shown in FIG. 3, an outer end part of the input end part 31 is connected to an outer end part of the output end part 32 via the elastic portion 33. Thus, the elastic portion 33 expands and contracts in accordance with a magnitude of a rotation angle (that is, a phase) of the outer end part of the input end part 31. Furthermore, a torque acts on the outer end part of the output end part 32 from the outer end part of the input end part 31 via the elastic portion 33. By means of this torque, the output end part 32 rotates around the rotation axis R together with the second member M2 (that is, the drive target) connected to the output end part 32.

For example, in FIG. 3, when the input end part 31 rotates clockwise on the paper surface, the elastic portions 331 and 333 contract, and the outer end part of the output end part 32 is pressed by the elastic portions 331 and 333. In addition, the elastic portions 332 and 334 extend, and the outer end part of the output end part 32 is pulled by the elastic portions 332 and 334. As a result, a clockwise torque direction on the paper surface acts on the outer end part of the output end part 32. Therefore, the second member M2 (that is, the drive target) rotates clockwise on the paper surface together with the output end part 32.

On the other hand, in FIG. 3, when the input end part 31 rotates counterclockwise on the paper surface, the elastic portions 331 and 333 extend, and the outer end part of the output end part 32 is pulled by the elastic portions 331 and 333. In addition, the elastic portions 332 and 334 contract, and the outer end part of the output end part 32 is pressed by the elastic portions 332 and 334. As a result, a counterclockwise torque on the paper surface acts on the outer end part of the output end part 32. Therefore, the second member M2 (that is, the drive target) rotates counterclockwise on the paper surface together with the output end part 32.

Since the SEA 500 includes the buffer device 3, the back-drivability of the SEA 500 can be improved. Note that the back-drivability means such a characteristic that, when an appropriate force is applied to an output node, the node is moved, and the movement is transmitted to an input node side, and in general, the back-drivability becomes lower as the speed reduction ratio is higher. In contrast, in the SEA 500, by mounting the buffer device 3, when a sudden change in a torque, an impact or the like caused by the action of an external force or the like is transmitted from one of the input end part 31 and the output end part 32 to the other, the elastic portion 33 buffers them. Therefore, even if the speed reduction ratio of the speed reducer 2 is high, the SEA 500 can sufficiently perform a free and precise operation.

The connection portion between the first member M1 and the second member M2 has a through hole Mh extending in the axial direction of the rotation axis R (the right-left direction, for example). The through hole Mh includes a through hole disposed in the base end part of the first member M1 and a through hole disposed in the distal end part of the second member M2. In other words, the through hole Mh is a collective term of a through hole disposed in the base end part of the first member M1 and a through hole disposed in the distal end part of the second member M2. The output shaft 22 of the speed reducer 2 is inserted into the through hole Mh. Note that, in the first embodiment, the output shaft 22 is opposed to the inner-side surface of the through hole Mh in a radial direction with an interval therebetween, that is, the output shaft 22 is not in contact with the inner-side surface of the through hole Mh.

In the SEA 500, at least a part of the buffer device 3 is disposed on a side opposite to the motor portion 1 and the speed reducer 2 by sandwiching the second member M2 (that is, the drive target) therebetween. In this embodiment, the entire buffer device 3 is disposed on the side opposite to the motor portion 1 and the speed reducer 2 with the second member M2 interposed therebetween (see FIG. 3 to FIG. 9). However, this exemplification is not limiting, and a part of the buffer device 3 may be disposed inside the through hole Mh disposed in the second member M2 (that is, the drive target), for example. In addition, the output shaft 22 of the speed reducer 2 is connected to the buffer device 3 through the through hole Mh disposed in the second member M2 (that is, the drive target), and in more detail, is connected to the input end part 31 of the buffer device 3. The output end part 32 of the buffer device 3 is connected to the second member M2 (that is, the drive target).

In this way, even without removing the motor portion 1 and the speed reducer 2, for example, the buffer device 3 can be easily attached and removed. Therefore, replacement to the buffer device 3 having a different specification, repair and inspection of the buffer device 3 and the like can be easily performed. In addition, when the buffer device 3 is not required, for example, the output shaft 22 of the speed reducer 2 can be directly connected to the second member M2 for use by removing the buffer device 3.

Subsequently, the SEA 500 further includes a sensor 4 for detecting a relative phase (a rotation angle difference, for example) between the input end part 31 of the buffer device 3 and the output end part 32 of the buffer device 3. The SEA 500 detects relative displacements between the input end part 31 of the buffer device 3 and the output end part 32 of the buffer device 3.

As a result, by acquiring the displacement of the elastic portion 33, a load acting on the SEA 500 can be calculated. Therefore, the SEA 500 can execute more accurate feedback control of the drive of the second member M2 on the basis of the load, for example. Therefore, the back-drivability of the SEA 500 is improved.

As the sensor 4, an encoder, for example, is adopted. The encoder can detect a phase (a rotation angle, for example), a phase velocity (the number of rotations, for example), a relative phase (a rotation angle difference), and the like.

For example, as shown in FIG. 4, the sensor 4 detects a relative phase (a rotation angle difference, for example) of the other to one of the input end part 31 and the output end part 32. In this way, the load acting on the SEA 500 can be obtained on the basis of the above-described relative phase (the rotation angle difference, for example). Therefore, even if the number of the sensors 4 is one, the SEA 500 is sufficiently feedback-controlled on the basis of the detection result. Therefore, since the number of components is reduced, the size of the SEA 500 can be reduced. Furthermore, manufacturing efficiency and a cost of the SEA 500 are reduced, and its productivity is improved.

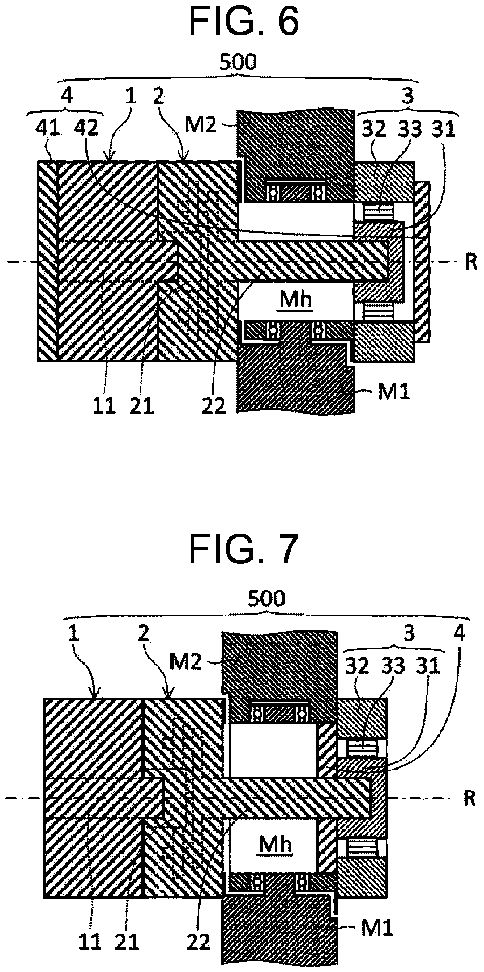

Note that, in FIG. 4, the sensor 4 is disposed on the outer side in the axial direction of the input end part 31 and the output end part 32 (that is, on the right side of the paper surface in FIG. 4). However, this exemplification is not limiting, and as shown in FIG. 7, the above-described sensor 4 may be disposed on the inner side in the axial direction of the input end part 31 and the output end part 32 (that is, on the left side of the paper surface in FIG. 4 and on the side of the motor portion 1 and the speed reducer 2).

Alternatively, as shown in FIG. 5 to FIG. 9, the sensor 4 may include a first sensor 41 and a second sensor 42. The first sensor 41 and the second sensor 42 are encoders attached to different spots, respectively, for example. The first sensor 41 detects a relative phase (a rotation angle difference, for example) of the input end part 31. The second sensor 42 detects a relative phase (a rotation angle difference, for example) of the output end part 32. In this way, the load acting on the SEA 500 can be acquired from the relative phase (the rotation angle difference, for example) by acquiring relative phase (the rotation angle differences, for example) of the both on the basis of the respective phases (rotation angles, for example). Therefore, the feedback control of the SEA 500 can be executed on the basis of the detection results of the first sensor 41 and the second sensor 42.

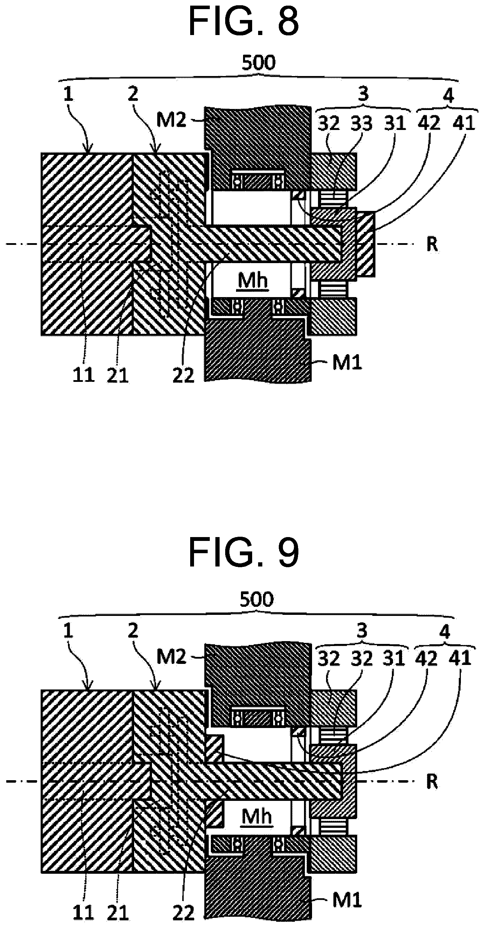

For example, in FIG. 5 and FIG. 9, the first sensor 41 is attached to the output side of the speed reducer 2 and detects the phase (the rotation angle, for example) of the output shaft 22 of the speed reducer 2 that rotates together with the input end part 31. However, this exemplification is not limiting. As shown in FIG. 6, the first sensor 41 may be attached to the motor portion 1 so as to detect the phase (the rotation angle, for example) of the motor output shaft 11 thereof. In addition, the first sensor 41 may be disposed on the outer side of the motor portion 1 (on the left side of the paper surface in FIG. 6), or may be disposed between the motor portion 1 and the speed reducer 2 so as to detect the phase (the rotation angle, for example) of the motor output shaft 11 or the input shaft 21. In this case, the phase (the rotation angle, for example) of the input end part 31 is obtained by acquiring the phase (the rotation angle, for example) of the output shaft 22 on the basis of the detected phase (the rotation angle, for example) and the speed reduction ratio of the speed reducer 2. Alternatively, the first sensor 41 may be attached to an outer peripheral surface of the output shaft 22 or may be attached to the input end part 31 as shown in FIG. 7. In the latter case, the first sensor 41 may be attached to the outer side in the axial direction (the right side on the paper surface in FIG. 7) of the input end part 31 or may be attached to the inner side in the axial direction (the left side on the paper surface in FIG. 7) of the input end part 31.

In addition, in FIG. 5 and FIG. 6, the second sensor 42 is attached to the output end part 32. At this time, the second sensor 42 may be attached to the outer side in the axial direction (the right side on the paper surface in FIG. 5 and FIG. 6) of the output end part 32 or may be attached to the inner side in the axial direction (the left side on the paper surface in FIG. 5 and FIG. 6) of the output end part 32. However, this exemplification is not limiting. For example, the second sensor 42 may be attached to the second member M2 so as to detect the phase (the rotation angle, for example) of the second member M2 that rotates together with the output end part 32.

In addition, at least a part of the sensor 4 may be disposed in the through hole Mh of the second member M2 (that is, the drive target). In this way, a volume occupied by at least a part of the sensor 4 outside the through hole Mh is reduced or eliminated. Therefore, the size of the SEA 500 becomes smaller, whereby the SEA 500 is made smaller and more compact.

For example, as shown in FIG. 7, the single sensor 4 that detects the relative phase (the rotational angle difference, for example) of the input end part 31 and the output end part 32 may be disposed in the through hole Mh of the connection portion between the first member M1 and the second member M2. At this time, the sensor 4 detects the above-described phase (the rotation angle, for example) on the basis of the phase (the rotation angle, for example) of the input end part 31 and the phase (the rotation angle, for example) of the output end part 32 or the second member M2. Note that, in FIG. 7, the entire single sensor 4 is accommodated in the through hole Mh. However, this exemplification is not limiting, and a part of the single sensor 4 may be accommodated in the through hole Mh.

Alternatively, as shown in FIG. 8 and FIG. 9, at least either one of the first sensor 41 and the second sensor 42 may be disposed in the through hole Mh of the connection portion between the first member M1 and the second member M2. For example, in FIG. 8, the first sensor 41 is disposed outside the through hole Mh, while the second sensor 42 is disposed on the inner peripheral surface of the second member M2 in the through hole Mh. Alternatively, for example, the second sensor 42 may be disposed outside the through hole Mh as shown in FIG. 5, while the first sensor 41 may be disposed on the output side (the output shaft 22 or the like) of the speed reducer 2 in the through hole Mh as shown in FIG. 9. In addition, in FIG. 9, both the first sensor 41 and the second sensor 42 are disposed in the through hole Mh.

### 1-4. Variation of First Embodiment

Subsequently, a variation of the first embodiment will be explained with reference to FIG. 10A and FIG. 10B. FIG. 10A is a conceptual diagram illustrating a seventh configuration example of the SEA according to the variation of the first embodiment. FIG. 10B is a conceptual diagram illustrating an eighth configuration example of the SEA according to the variation of the first embodiment.

In the variation of the first embodiment, the buffer device 3 is disposed inside the through hole Mh disposed in the second member M2 (that is, the drive target). The output shaft 22 of the speed reducer 2 is connected to the input end part 31 of the buffer device 3 through the through hole Mh. The output end part 32 of the buffer device 3 is connected to the second member M2. For example, in FIG. 10A and FIG. 10B, the entire buffer device 3 is disposed in the through hole Mh. However, the exemplifications in FIG. 10A and FIG. 10B do not exclude a configuration in which the entire buffer device 3 is not disposed in the through hole Mh. For example, a part of the buffer device 3 may be disposed outside the through hole Mh.

In this way, even without removing the motor portion 1 and the speed reducer 2, for example, the buffer device 3 can be easily attached and removed. Therefore, replacement with the buffer device 3 having a different specification, repair and inspection of the buffer device 3 and the like can be easily performed. In addition, when the buffer device 3 is not required, for example, the output shaft 22 of the speed reducer 2 can be directly connected to the second member M2 for use by removing the buffer device 3.

In addition, by disposing at least a part of the buffer device 3 in the through hole Mh, it is possible to further reduce the size of the SEA 500 in the axial direction (for example, the right-left direction) in which the center axis of the through hole Mh extends. Thus, it is possible to make the SEA 500 smaller and more compact.

Preferably, at least a part of the sensor 4 is disposed in the through hole Mh. More preferably, the entire sensor 4 is disposed in the through hole Mh. For example, in FIG. 10A, the entire single sensor 4 that detects the relative phase (the rotational angle difference, for example) of the input end part 31 and the output end part 32 is disposed in the through hole Mh. In addition, in FIG. 10B, the entire first sensor 41 that detects the phase (the rotation angle, for example) (that is, the phase of the input end part 31 (the rotation angle, for example) of the output shaft 22 and the entire second sensor 42 that detects the phase (the rotation angle, for example) of the output end part 32 are disposed in the through hole Mh. Note that the second sensor 42 is disposed at the output end part 32 in FIG. 10B, but this exemplification is not limiting and the second sensor 42 may be disposed on the inner peripheral surface of the second member M2 so as to detect the phase (the rotation angle, for example) of the second member M2.

In this way, the size of the SEA 500 in the axial direction (the right-left direction, for example) is further reduced. Thus, the SEA 500 is made smaller and more compact.

However, the above-described exemplification does not exclude a configuration in which the entire sensor 4 is disposed outside the through- hole Mh in the variation exemplified in FIG. 10A and FIG. 10B.

### 2. Second Embodiment

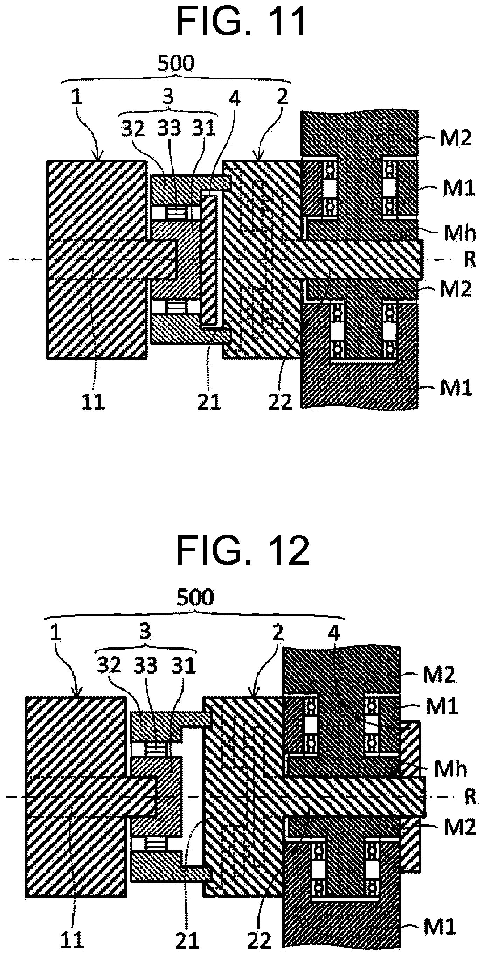

Subsequently, a second embodiment will be explained with reference to FIG. 11 to FIG. 14. FIG. 11 to FIG. 14 are conceptual diagrams illustrating ninth to twelfth configuration examples of the SEA according to the second embodiment, respectively. Hereinafter, a configuration different from those of the first embodiment and the variation thereof will be described. In addition, in the second embodiment, the same signs are given to the components similar to those of the first embodiment and the variation thereof, and the description thereof may be omitted in some cases. In addition, the second embodiment can be arbitrarily combined with the first embodiment and the variation thereof as long as no contradiction occurs.

In the second embodiment, the buffer device 3 is disposed between the motor portion 1 and the speed reducer 2. The buffer device 3 outputs the torque of the motor portion 1 from the output end part 32 via the elastic portion 33. The output end part 32 of the buffer device 3 is connected to the speed reducer 2 or to the input shaft 21 thereof, in detail. The speed reducer 2 reduces the torque input from the buffer device 3. The output shaft 22 of the speed reducer 2 is connected to the second member M2 (that is, the drive target). For example, in FIG. 11 to FIG. 14, the output shaft 22 is inserted into the through hole Mh and is brought into contact with the inner-side surface of the second member M2 (through hole Mh).

In this way, the buffer device 3 having a specification corresponding to the torque output from the motor portion 1 can be adopted. For example, as compared with a configuration in which the buffer device 3 is disposed between the speed reducer 2 and the second member M2, it is possible to use the buffer device 3 that is smaller, more compact, and more light-weighted. By making the device smaller, more compact, and more light-weighted, the buffer device 3 can be easily carried when the buffer device 3 is attached and removed for assembly, repair, inspection and the like of the SEA 500. Furthermore, the buffer device 3 can be attached and removed by removing only the motor portion 1 of the motor portion 1 and the speed reducer 2. In other words, the buffer device 3 can be attached and removed even without removing both the motor portion 1 and the speed reducer 2. Therefore, attachment and removal of the buffer device 3 is facilitated. Furthermore, since the degree of freedom in selecting the buffer device 3 is increased, various configurations and types of the buffer device 3 can be used depending on the situation.

In FIG. 11, the single sensor 4 for detecting a relative phase (a rotation angle difference, for example) between the input end part 31 and the output end part 32 is disposed between the speed reducer 2 and the buffer device 3. However, this exemplification is not limiting, and the single sensor 4 may be disposed between the motor portion 1 and the buffer device 3. Alternatively, as shown in FIG. 12, the single sensor 4 may be disposed on the side opposite to the motor portion 1 and the speed reducer 2 with the second member M2 interposed therebetween, and may detect the difference in phase (a rotation angle, for example) between the first member M1 and the second member M2. Even in these cases, it is easy to accurately execute the feedback control of the drive of the second member M2 on the basis of the relative phase (the rotation angle difference, for example). Therefore, the back-drivability of the SEA 500 is improved.

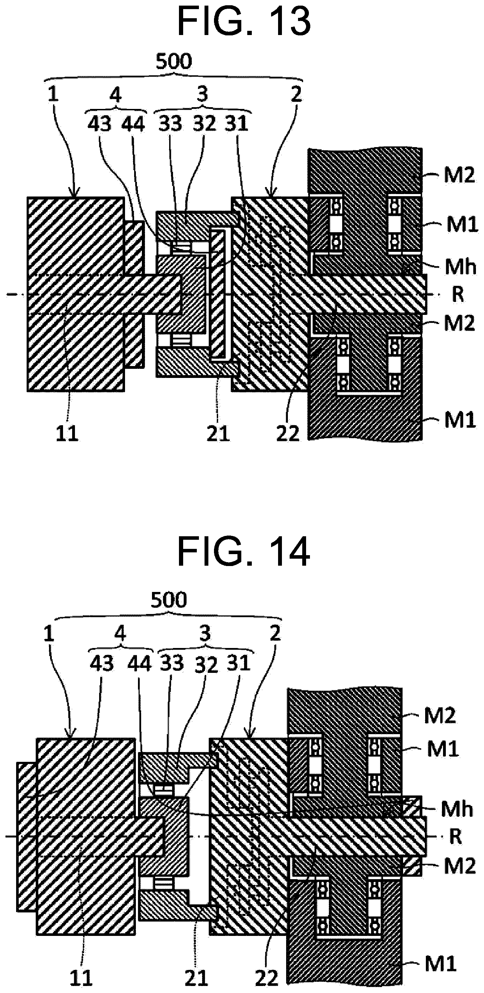

Alternatively, as shown in FIG. 13 and FIG. 14, the sensor 4 may have a third sensor 43 and a fourth sensor 44. The third sensor 43 detects a phase (a rotation angle, for example) of the motor output shaft 11 of the motor portion 1. The fourth sensor 44 detects a phase (a rotation angle, for example) of either one of the input shaft 21 and the output shaft 22 of the speed reducer 2. In this way, the load acting on the SEA 500 can be obtained by acquiring the relative phase (the rotation angle difference, for example) of the both on the basis of the detection results of the third sensor 43 and the fourth sensor 44. Therefore, the feedback control of the SEA 500 can be executed on the basis of the detection results of the third sensor 43 and the fourth sensor 44.

For example, the third sensor 43 may be disposed between the motor portion 1 and the buffer device 3 as shown in FIG. 13, or may be disposed on the side opposite to the buffer device 3 in the axial direction of the motor portion 1 as shown in FIG. 14.

In addition, the fourth sensor 44 may be disposed between the buffer device 3 and the speed reducer 2 as shown in FIG. 13, or may be disposed on the side opposite to the buffer device 3 in the axial direction of the speed reducer 2 as shown in FIG. 14. Note that, in FIG. 14, it can be said that the fourth sensor 44 is disposed at the distal end part of the output shaft 22, and it can also be said that the fourth sensor 44 is disposed on the side opposite to the speed reducer 2 with the connection portion between the first member M1 and the second member M2 interposed therebetween. In addition, in FIG. 14, the fourth sensor 44 may be configured to detect the phase (the rotation angle, for example) of the second member M2 and to use the detection result as the phase (the rotation angle, for example) of the output shaft 22.

### 2-1. Variation of Second Embodiment

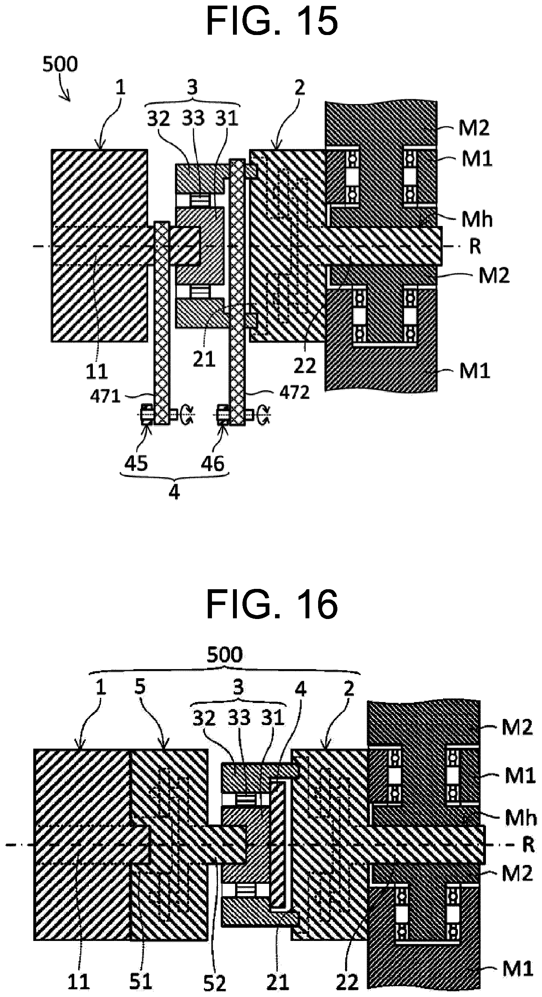

Subsequently, a variation of the second embodiment will be explained with reference to FIG. 15. FIG. 15 is a conceptual diagram illustrating a thirteenth configuration example of the SEA according to the variation of the second embodiment.

In the variation of the second embodiment, the sensor 4 includes a fifth sensor 45, a sixth sensor 46, a first rotation-transmission member 471, and a second rotation-transmission member 472. The first rotation-transmission member 471 and the second rotation-transmission member 472 are belt-like members.

The first rotation-transmission member 471 transmits the rotation of the motor output shaft 11 of the motor portion 1 outward in the radial direction from a spot between the motor portion 1 and the buffer device 3. The first rotation-transmission member 471 is extended around the motor output shaft 11 of the motor portion 1 and the fifth sensor 45. The first rotation-transmission member 471 is extended around the motor output shaft 11 between the motor portion 1 and the buffer device 3 in FIG. 15. However, this exemplification is not limiting, and the first rotation-transmission member 471 may be extended around the motor output shaft 11 on the side opposite to the buffer device 3 in the axial direction of the motor portion 1.

The second rotation-transmission member 472 transmits the rotation of at least any one of the output end part 32 of the buffer device 3, the input shaft 21 of the speed reducer 2, and the output shaft 22 of the speed reducer 2 more outward in the radial direction than a spot between the buffer device 3 and the second member M2(that is, the drive target). The second rotation-transmission member 472 is extended between at least either one of the output end part 32 and the input shaft 21, and the sixth sensor 46 in FIG. 15. However, this exemplification is not limiting, and the second rotation-transmission member 472 may be extended around the output shaft 22 of the speed reducer 2.

The fifth sensor 45 detects a phase (a rotation angle, for example) of the first rotation-transmission member 471, thereby detecting a phase (a rotation angle, for example) of the motor output shaft 11 (that is, a phase (a rotation angle, for example) of the input end part 31).

The sixth sensor 46 detects a phase (a rotation angle, for example) of the second rotation-transmission member 472, thereby detecting a phase (a rotation angle, for example) of at least any one of the output end part 32, the input shaft 21, and the output shaft 22.

In this way, outward in the radial direction from a spot between the motor portion 1 and the speed reducer 2, the phase (the rotation angle, for example) of the input end part 31 and the phase (the rotation angle, for example) of the output end part 32 of the buffer device 3 are detected, respectively. Accordingly, a relative phase (a rotation angle difference, for example) between the input end part 31 and the output end part 32 (in other words, a load acting on the SEA 500) can be obtained without disposing a sensor for detecting the phase (a rotation angle, for example) between the motor portion 1 and the second member M2.

### 3. Third Embodiment

Subsequently, a third embodiment will be explained with reference to FIG. 16. FIG. 16 is a conceptual diagram illustrating a fourteenth configuration example of the SEA according to the third embodiment. Hereinafter, a configuration different from those of the first embodiment, the second embodiment, and the variations thereof will be explained. In addition, in the third embodiment, the same signs are given to the components similar to those of the first embodiment, the second embodiment, and the variations thereof, and the description thereof may be omitted in some cases. In addition, the third embodiment can be arbitrarily combined with the first embodiment, the second embodiment, and the variations thereof as long as no contradiction occurs.

In the third embodiment, the SEA 500 includes two speed reducers 2 and 5. The buffer device 3 is disposed between the two speed reducers 2 and 5. For example, the speed reducer 2 is disposed between the buffer device and the second member M2. The speed reducer 5 is disposed between the motor portion 1 and the buffer device 3 and reduces the torque input from the motor portion 1. In detail, the speed reducer 5 reduces the torque input to an input shaft 51 at a predetermined speed reduction ratio and outputs it from an output shaft 52. Preferably, the reduction ratio of the speed reducer 5 is higher than the reduction ratio of the speed reducer 2. However, this exemplification does not exclude a configuration in which the reduction ratio of the speed reducer 5 is equal to or smaller than the reduction ratio of the speed reducer 2.

The input shaft 51 of the speed reducer 5 is connected to the motor output shaft 11 of the motor portion 1. The output shaft 52 of the speed reducer 5 is connected to the buffer device 3 or to the input end part 31 thereof, in particular. In this way, the speed reducers 2 and 5 are disposed on a front stage and a rear stage of the buffer device 3, respectively. In other words, the buffer device 3 is disposed between the two speed reducers 2 and 5. For example, the back-drivability of the speed reducers 2 and 5 lowers in accordance with the magnitude of the speed reduction ratio. Therefore, by setting the speed reduction ratio of the speed reducer 5 on the front stage higher than the speed reduction ratio of the speed reducer 2 on the rear stage, the torque transmitted from the motor portion 1 to the second member M2 can be easily reduced at a high speed reduction ratio without increasing the size of the buffer device 3. That is, both a high speed reduction ratio and size reduction of the buffer device 3 can be both realized.

Note that, in the SEA 500 of the third embodiment, the sensor 4 is single as shown in FIG. 16 and may detect the relative phase (the rotational angle difference, for example) of the input end part 31 and the output end part 32. Alternatively, the sensor 4 may have a sensor that detects a phase (a rotation angle, for example) of the input end part 31 and a sensor that detects a phase (a rotation angle, for example) of the output end part 32. The disposition of the sensor 4 is not particularly limited, and for example, the dispositions shown in FIG. 4 to FIG. 16 may be adopted.

### 4. Fourth Embodiment

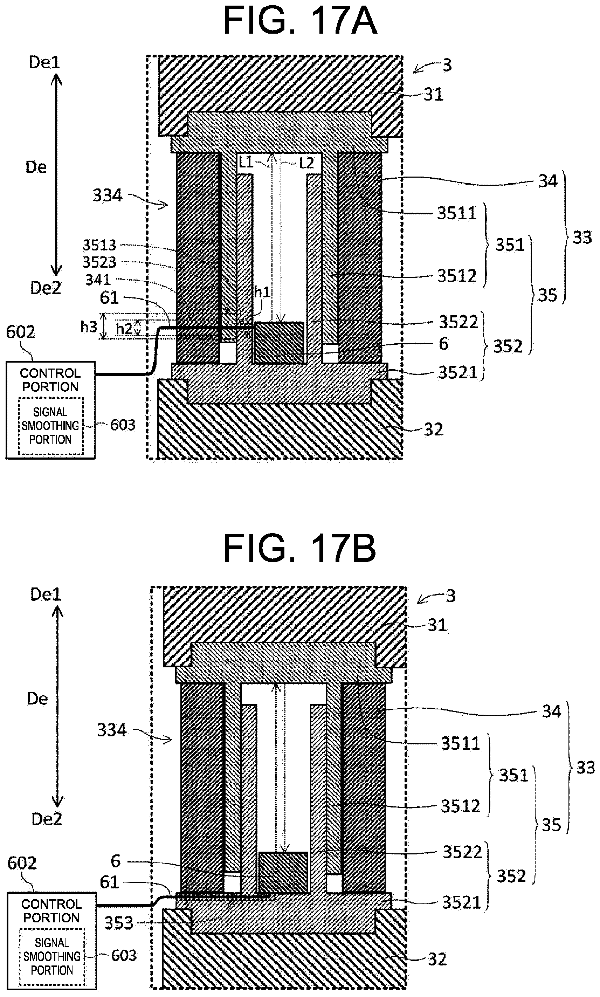

Subsequently, a fourth embodiment will be explained with reference to FIG. 17A and FIG. 17B. FIG. 17A is a sectional view illustrating a configuration example of the buffer device 3 according to the fourth embodiment. FIG. 17B is a sectional view illustrating another configuration example of the buffer device 3 according to the fourth embodiment. Note that the sections of the elastic portion 33 in FIG. 17A and FIG. 17B correspond to a portion XVII surrounded by a broken line in FIG. 3.

Hereinafter, a configuration of the fourth embodiment different from those of the first embodiment to the third embodiment and the variations thereof will be explained. In addition, in the fourth embodiment, the same signs are given to the components similar to those of the first embodiment to the third embodiment and the variations thereof, and the description thereof may be omitted in some cases. In addition, the fourth embodiment can be arbitrarily combined with the first embodiment to the third embodiment and the variations thereof as long as no contradiction occurs.

In the fourth embodiment, the SEA 500 further has a displacement sensor 6. The displacement sensor 6 is a sensor for detecting the amount of expansion and contraction (displacement) in the direction De of the elastic member 34 of the elastic portion 33 and outputs the detection result to the control portion 602. For example, as shown in FIG. 17A and FIG. 17B, inside the cylindrical elastic member 34, the cylindrical first restraining portion 3512, and the cylindrical second restraining portion 3522, the displacement sensor 6 is disposed on either one of the surface of the first base body 3511 facing the direction De2 and the surface of the second base body 3521 facing the direction De1.

In this embodiment, the displacement sensor 6 is a laser displacement gauge and is disposed on the first base body 3511 side. The displacement sensor 6 detects a change (displacement) in the interval between the displacement sensor 6 and the surface on the direction De2 side of the first base body 3511 on the basis of a laser light L1 emitted from the laser displacement gauge and a reflection light L2 thereof. However, the exemplification of this embodiment does not exclude a configuration in which the displacement sensor 6 is not a laser displacement gauge. The displacement sensor 6 only needs to be capable of detecting the amount of expansion and contraction (displacement) in the direction De of the elastic member 34 and may be, for example, either one of a contact-type displacement gauge such as a linear encoder and a non-contact type displacement gauge such as an ultrasonic displacement gauge.

The control portion 602 calculates a phase (a rotation angle, for example), a phase velocity (the number of rotations, for example) and the like between the input end part 31 and the output end part 32 connected via the elastic portion 33 on the basis of the detection result of the displacement sensor 6. In addition, the control portion 602 may calculate a relative phase (a rotation angle difference, for example) of the other to one of the input end part 31 and the output end part 32 to the other or the like. Furthermore, the control portion 602 calculates a load acting on the SEA 500 on the basis of the above-described calculation result and feedback-controls the SEA 500.

The displacement sensor 6 can detect a change (displacement) in the interval between the input end part 31 and the output end part 32 via the elastic portion 33 with accuracy. Therefore, the control portion 602 can calculate the phase (the rotation angle, for example), the phase velocity

(the number of rotations, for example), the relative phase (the rotation angle difference) and the like described above more accurately than in a case where the detection result of the sensor 4 such as an encoder is used. Therefore, the control portion 602 can execute feedback control of the SEA 500 more accurately by using the detection result of the displacement sensor 6.

Note that, by using the displacement sensor 6 as above, the detection accuracy of the displacement is improved, and it becomes possible to detect even a minute displacement by the unit of µm, for example. Therefore, the displacement sensor 6 may detect a minute vibration component (by the unit of µm, for example) in the direction De of the elastic member 34 in some cases.

The minute vibration component is a reciprocating minute displacement, acts as a detection noise of the displacement sensor 6, and may adversely affect the feedback control of the SEA 500.

Therefore, the control portion 602 preferably has a signal smoothing portion 603. The signal smoothing portion 603 is a filter that smooths an output signal indicating the detection result of the displacement sensor 6. Note that, for the smoothing processing, a method such as a least squares method, a moving average, a moving median, linear regression, quadratic regression or the like can be used. The control portion 602 accurately calculates the displacement of the elastic member 34, the phase (the rotation angle, for example), the phase velocity (the number of rotations, for example), the relative phase (the rotation angle difference) and the like described above on the basis of the smoothed output signal of the displacement sensor 6. Therefore, the control portion 602 can execute feedback control of the SEA 500 more accurately while the influence of the minute vibration component in the direction De of the elastic member 34 is suppressed or prevented. However, this exemplification does not exclude a configuration in which the control portion 602 does not have the signal smoothing portion 603.

Subsequently, the displacement sensor 6 is disposed on at least one of the elastic portions 33 of the buffer device 3 and is preferably disposed on all the elastic portions 33. By disposing the displacement sensors 6 in a larger number of elastic portions 33, the control portion 602 can calculate the phase, phase velocity, relative phase and the like described above more accurately and can feedback-control the SEA 500 with more accuracy.

Furthermore, in the fourth embodiment, the disposition of the sensors 4 (encoders, for example) can be reduced or omitted by the disposition of the displacement sensor 6. As a result, the size of the SEA 500 can be reduced. However, this exemplification does not exclude a configuration in which the disposition of the sensor 4 is not omitted. That is, the sensor 4 (an encoder, for example) may be disposed on the SEA 500 together with the displacement sensor 6, or only the displacement sensor 6 may be disposed.

In addition, in the fourth embodiment, wiring 61 of the displacement sensor 6 is withdrawn from the insides of the elastic member 34 and the stopper 35 to the outside thereof and is connected to the control portion 602 outside or the like.

For example, as shown in FIG. 17A, the wiring 61 is withdrawn to the outside through a first passage 3513 of the first stopper 351, a second passage 3523 of the second stopper 352, and a passage 341 of the elastic member 34.

The first passage 3513 is disposed in the first restraining portion 3512 of the first stopper 351 and extends in a direction intersecting the direction De. One end of the first passage 3513 is opened in the inner-side surface of the first restraining portion 3512, and the other end is opened in the outer-side surface of the first restraining portion 3512.

The second passage 3523 is disposed in the second restraining portion 3522 of the second stopper 352 and extends in a direction intersecting the direction De. One end of the second passage 3523 is opened in the inner-side surface of the second restraining portion 3522, and the other end is opened in the outer-side surface of the second restraining portion 3522.

The passage 341 is disposed in the elastic member 34 and connects the inside and the outside of the elastic member 34. In this embodiment, the passage 341 is a gap between adjacent turns in the direction De of the spring coil (that is, the elastic member 34). The expansion and contraction of the spring coil is limited to such an extent that the above-described gap is not closed by the stopper 35, and the wiring 61 is not pressed by the turns at all time. Note that, when the elastic member 34 is not a spring coil but has a tubular shape, for example, the passage 341 extending in the direction intersecting the direction De is disposed in the elastic member 34 and is connected to the inside and the outside of the elastic member 34.

In FIG. 17A, one end of the second passage 3523 is always connected to the other end of the first passage 2513 and the inner end of the passage 341, regardless of the displacement in the direction De of the second restraining portion 3522 due to the expansion and contraction of the elastic member 34. For example, preferably, in the direction De, a width h2 of the second passage 3523 is larger than a width h1 of the first passage 3513 and the width h3 of the passage 341.

However, as long as the second passage 3523 is connected to the first passage 3513 and the passage 341 all the time so that the wiring 61 can be inserted, this exemplification does not exclude a configuration of h2≤h1 or a configuration of h2≤h3.

Alternatively, as shown in FIG. 17B, the wiring 61 may be withdrawn from the insides of the elastic member 34 and the stopper 35 to the outside thereof through a groove 353 disposed on a surface of the base body 3521 facing the direction De1 from the base body 3521 of the second stopper 352. The groove 353 is recessed in the direction De2 and extends in a direction intersecting the direction De. One end of the groove 353 is connected to a space (in which the displacement sensor 6 is disposed) on the inner sides of the elastic member 34 and the stopper 35. The other end of the groove 353 is connected to a space on the outer sides of the elastic member 34 and the stopper 35.

In either one of the configurations in FIG. 17A and FIG. 17B, the wiring 61 is withdrawn to the outside without being subjected to compression caused by expansion and contraction (displacement) in the direction De of the elastic member 34. That is, it is possible to avoid a risk of disconnection of the wiring 61 due to the above-described compression.

Note that, in the fourth embodiment, the displacement sensor 6 is connected to the control portion 602 outside or the like by the wiring 61. However, this exemplification is not limiting, and the displacement sensor 6 may wirelessly communicate with the control portion 602 outside or the like. In the latter case, the wiring 61 is omitted.

### 5. Fifth Embodiment

Subsequently, a fifth embodiment will be explained. In the fifth embodiment, a configuration different from those of the first to fourth embodiments and the variations thereof will be explained. In addition, in the fifth embodiment, the same signs are given to the components similar to those of the first embodiment to the fourth embodiment and the variations thereof, and the description thereof may be omitted in some cases. In addition, the fifth embodiment can be arbitrarily combined with the first embodiment to the fourth embodiment and the variations thereof as long as no contradiction occurs.

In a work machine such as the excavator 100, a work of suspending a material may be performed by a hoisting attachment 404 (see FIG. 1) disposed near the distal end part of the bucket 403 or the third joint portion 4053. In addition, such a work is performed that another attachment mounted in place of the bucket 403 is held along a predetermined surface of a plate-like material, for example, in some cases. Conventionally, these operations have been performed by visual recognition by an operator or an operation assistant.

However, since the performance of the above-described work by visual recognition requires skilled operation or cooperation, an operation error is likely to occur. In addition, under such a situation that visual recognition is difficult, the performance of a work with an appropriate operation and force is difficult. In addition, when a work assistant performs assistance, a plurality of workers are required for the above-described work.

In view of the above-described circumstances, an object of the fifth embodiment is to provide a work machine capable of performing an actual work at the distal end part of the operating machine 400 with an appropriate operation and drive force.

In the fifth embodiment, the excavator 100 is capable of reaction force control of the operating machine 400. For example, when the distal end part of the operating machine 400 comes into contact with an object such as a work target, a reaction force acts on the distal end part from the object. In the reaction force control, first, by detecting generation of a reaction force Fo acting on the distal end part of the operating machine 400, the excavator 100 can detect that the distal end part of the operating machine 400 has come into contact with an object. As a result, the excavator 100 can prevent a risk of breakage of the contacted target and the operating machine 400 or the like by stopping the operation of the operating machine 400 or by separating the operating machine 400 from the contact target at the detection of the contact, for example.

In addition, (the magnitude and direction of) the reaction force Fo can be estimated, a target reaction force can be set in accordance with a target or the like, and the reaction force Fo can also be adjusted. As a result, the risk of breakage of the operating machine 400 and the target due to an excessive load at the time of contact can be prevented.

Note that the reaction force control can be switched between ON and OFF by an operation input to the operation portion 301, for example.

For example, a force control mechanism 510 or a load measurement mechanism 520 is disposed in at least one of the connection portions of the excavator 100. Note that the connection portion of the work machine 100 includes a part 406 (see FIG. 1) at which the upper revolving body 300 is connected to the lower traveling body 200, capable of revolution, the joint portion 405 of the operating machine 400 and the like. The joint portion 405 of the operating machine 400 includes the first joint portion 4051 between the base end part of the boom 401 and the front part of the upper revolving body 300, the second joint portion 4052 between the base end part of the arm 402 and the distal end part of the boom 401, the third joint portion 4053 between the bucket 403 and the distal end part of the arm 402 and the like.

The force control mechanism 510 has at least a drive function and preferably further has a load measurement function. The force control mechanism 510 drives the joint portion 405 by the drive function under the control of the control portion 602, measures a load acting on the joint portion 405 by the load measurement function, and outputs it to the control portion 602.

As the force control mechanism 510, the SEA 500 can be used. The direction and magnitude of the load applied to the SEA 500 during performance of the work are calculated by the control portion 602 on the basis of the detection result of the sensor 4, the detection result of the displacement sensor 6 of the third embodiment and the like. For example, the direction and magnitude of the load applied to the SEA 500 can be calculated on the basis of the displacement (displacement direction, displacement amount with a no-load state as a reference) of the elastic member 34 at each time point, the elastic coefficient of the elastic member 34 and the like, or in other words, it can be calculated from the elastic force of the elastic member 34 at each time point. However, this exemplification does not exclude a configuration in which the force control mechanism 510 is not the SEA 500.

The load measurement mechanism 520 detects the magnitude and direction of a load acting on the joint portion 405 and outputs them to the control portion 602. The load measurement mechanism 520 is, for example, a force sensor, and is attached to the joint portion 405.

In the fifth embodiment, when the operating machine 400 is operated, the control portion 602 estimates the magnitude and direction of the reaction force Fo acting on the distal end part of the operating machine 400 on the basis of the detection result of (the magnitude and direction of) the load acting at least on the joint portion 405. Note that the magnitude and direction of the reaction force Fo can be calculated by solving forward kinematics of robotics on the basis of the torque (load) acting on the joint portion 405, an attitude angle (a rotation angle, for example) of the joint portion 405 and the like. The control portion 602 adjusts the actual reaction force Fo by controlling the drive of the force control mechanism 510 or the actuator of each j oint portion 405 of the excavator 100 on the basis of the estimation result of the reaction force Fo and (the magnitude and the direction of) the target reaction force Fd.

Note that the reaction force Fo is a reactive force that the distal end part of the operating machine 400 receives from the work target during the work. The target reaction force Fd is an ideal reaction force Fo acting on the distal end part of the operating machine 400 when the operating machine 400 is driven with an appropriate operation and drive force. The target reaction force Fd is set, for example, on the basis of an operation input received by the operation portion 301 and is stored in the storage portion 601.

Furthermore, the magnitudes of the reaction force Fo and the target reaction force Fd are expressed by their absolute values. The directions of the reaction force Fo and the target reaction force Fd are represented by positive and negative values. For example, if the values of the reaction force Fo and the target reaction force Fd are both positive, they are in the same predetermined direction. Note that, if the both are negative, the both are in the direction opposite to the direction in the case of the positive described above. On the other hand, when the positive and negative signs are different, the direction of one of the both is the same as the direction opposite to the other.

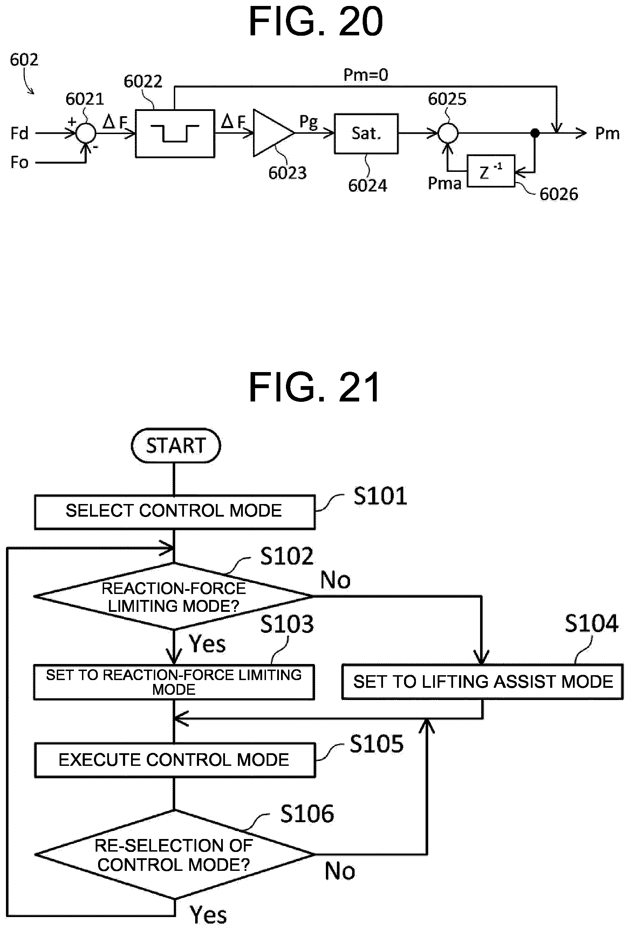

Preferably, the control portion 602 corrects the drive of the operating machine 400 and the force control mechanism 510 (the SEA 500, for example) on the basis of the estimated reaction force Fo, if the magnitude of the estimated reaction force Fo (corresponding to the absolute value of an amplification value Pg in FIG. 20, which will be described later) is less than a predetermined value (corresponding to the absolute values of predetermined values Pu and Pd in FIG. 20). On the other hand, if the magnitude of the estimated reaction force Fo (corresponding to the absolute value of amplification value Pg in FIG. 20, which will be described later) is equal to or greater than a predetermined value (corresponding to the absolute values of predetermined values Pu and Pd in FIG. 20), the control portion 602 corrects the drive of the operating machine 400 and the force control mechanism 510 (the SEA 500, for example) on the basis of the predetermined value.

Furthermore, the control portion 602 corrects the driving direction and the driving amount (in other words, the movement amount) of the distal end part of the operating machine 400 when the operating machine 400 is operated on the basis of (the magnitude and the direction of) the estimated reaction force Fo and (the magnitude and the direction of) the target reaction force Fd.

By means of the above-described control, the excavator 100 can cause the operating machine 400 to work with an appropriate operation and drive force. For example, the excavator 100 can cause the actual reaction force Fo to approach and preferably coincide with the target reaction force Fd or can cause the operating machine 400 to work in a state where the reaction force Fo is kept constant. Therefore, the excavator 100 can perform actual works at the distal end part of the operating machine 400, such as suspending of a material, holding of a material by an alternative attachment and the like with an appropriate operation and drive force without requiring assistance such as visual recognition by the operator and the work assistant. In addition, it is possible to prevent a risk that the operating machine 400 and/or the work target from being damaged by the operation of (the distal end part of) the operating machine 400 or the like.

5-1. Disposition Example of Force Control Mechanism 510 and Load Measurement Mechanism 520

In the excavator 100, the force control mechanism 510 is attached to at least one joint portion 405 of the operating machine 400.

### 5-1-1. Embodiment

For example, the force control mechanisms 510 having a drive function and a load measurement function are attached to all the joint portions 405 of the operating machine 400 (see FIG. 1). In this way, the control portion 602 can detect the load in all the joint portions 405 and can drive all the joint portions 405 with an appropriate operation and drive force. Therefore, the operating machine 400 can realize a flexible operation.

### 5-1-2. Variations

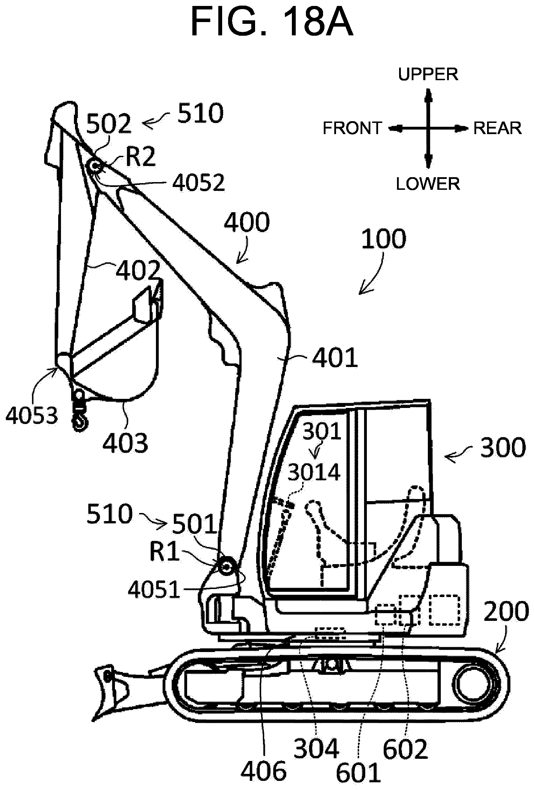

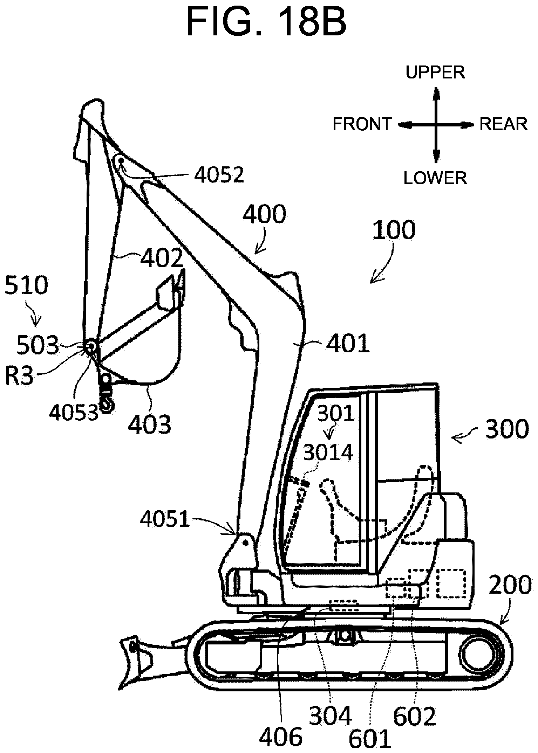

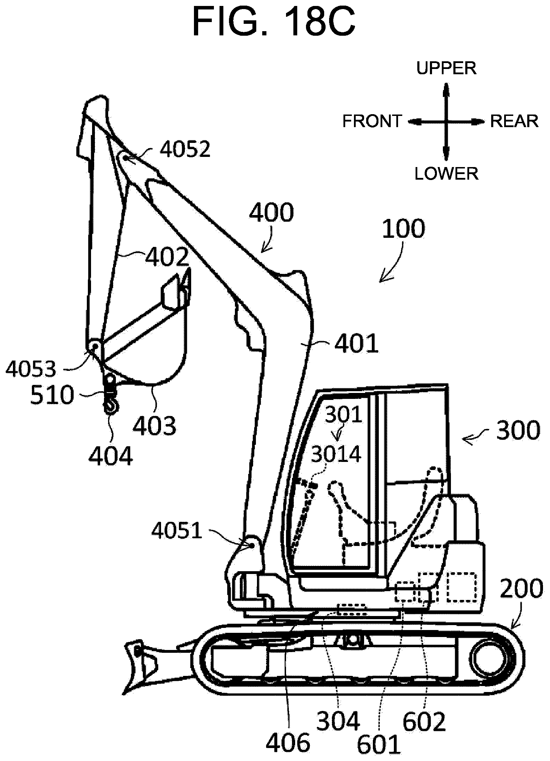

Alternatively, the force control mechanism 510 may be attached to some of the joint portions 405 of the operating machine 400. FIG. 18A is a schematic diagram illustrating a first disposition example of the force control mechanism 510 according to the variation of the fifth embodiment. FIG. 18B is a schematic diagram illustrating a second disposition example of the force control mechanism 510 according to the modification of the fifth embodiment. FIG. 18C is a schematic diagram illustrating a third disposition example of the force control mechanism 510 according to the modification of the fifth embodiment. Note that FIG. 18A to FIG. 18C illustrate a part of the disposition example of the force control mechanism 510 in the variation of the fifth embodiment. Therefore, even the dispositions other than FIG. 18A to FIG. 18C are not excluded as long as the force control mechanisms 510 are attached to some of the joint portions 405 of the operating machine 400.

### 5-1-2-1. First Disposition Example

As shown in FIG. 18A, the force control mechanism 510 having the drive function and the load measurement function is disposed on the first joint portion 4051 and the second joint portion 4052. For example, the boom SEA 501 is disposed on the first joint portion 4051. The arm SEA is disposed on the second joint portion 4052. On the other hand, the force control mechanism 510 such as the bucket SEA 503 is not disposed on the third joint portion.

In this way, the control portion 602 can detect the load in the first joint portion 4051 and the second joint portion 4052 and can drive these joint portions 4051 and 4052 with an appropriate operation and drive force. Therefore, the operating machine 400 can realize a flexible operation.

### 5-1-2-2. Second Disposition Example

As shown in FIG. 18B, the force control mechanism 510 having the drive function and the load measurement function is disposed on the third joint portion 4053. For example, the bucket SEA 503 is disposed on the third joint portion 4053. On the other hand, the force control mechanism 510 such as the SEA 500 is not disposed on the first joint portion 4051 and the second joint portion 4052.

In the third joint portion 4053, inertia at the time of drive control is smaller than in the other joint portions 4051 and 4052. Thus, responsiveness of the drive control of the force control mechanism 510 attached to the third joint portion 4053 is favorable. Therefore, the operating machine 400 can realize a precise and quick operation only by the distal end part thereof. In addition, the smaller and lighter force control mechanism 510 can be attached to the third joint portion 4053.

Note that, the above-described first disposition example and the second disposition example are not limiting, and the force control mechanism 510 attached to the operating machine 400 may be disposed at a position other than the first joint portion 4051 to the third joint portion 4053.

### 5-1-2-3. Third Disposition Example

As shown in FIG. 18C, the force control mechanism 510 having the drive function and the load measurement function is, for example, the SEA 500, and is disposed at a connection portion between a distal end part of the operating machine 400 and a working member attached to the distal end part. The working member may be, for example, the hoisting attachment 404 or an attachment such as a robot arm attached to the distal end part of the operating machine 400. In this way, the smaller and lighter force control mechanism 510 can be attached to the distal end part of the operating machine 400.

### 5-1-2-4. Fourth Disposition Example

Other than the above, the force control mechanism 510 (SEA 500, for example) may be disposed not only on the joint portion 405 of the operating machine 400 but also on a connection portion between the lower traveling body 200 and the upper revolving body 300. In this way, the control portion 602 can adjust the reaction force Fo in consideration of the revolving direction of the upper revolving body 300 with respect to the lower traveling body 200.

Note that, in the first to fourth disposition examples described above, the force control mechanism 510 has both the drive function and the load measurement function. However, this exemplification is not limiting, and the force control mechanism 510 having the drive function and the load measurement mechanism 520 may be disposed individually.

### 5-1-3. Other Variations

Alternatively, in the excavator 100, a mechanism having a function of driving at least one joint portion 405 of the operating machine 400 and a mechanism having a function of measuring a load acting on at least one joint portion 405 of the operating machine 400 may be individually disposed.

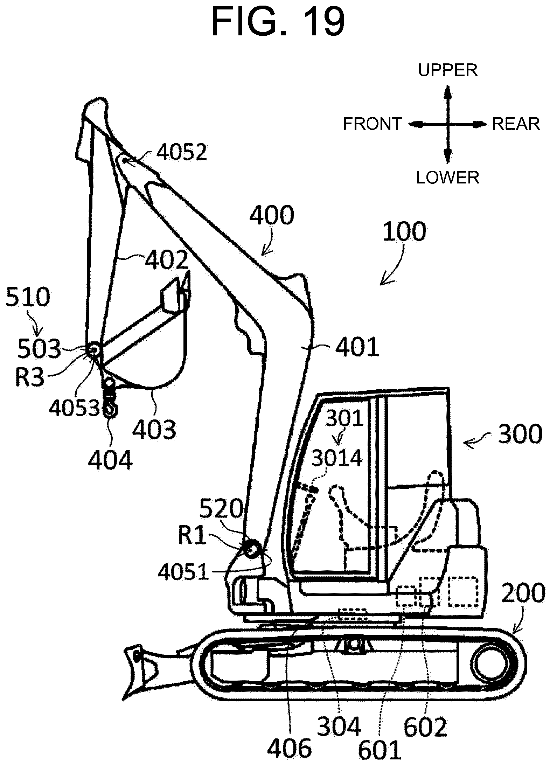

FIG. 19 is a schematic diagram illustrating a disposition example of the force control mechanism 510 and the load measurement mechanism 520 according to another variation of the fifth embodiment. Note that FIG. 19 illustrates a part of a disposition example in another variation of the fifth embodiment of the mechanism having the function of driving at least one joint portion 405 of the operating machine 400 and the mechanism having the function of measuring the load acting on at least one joint portion 405 of the operating machine 400. Therefore, the exemplification of FIG. 19 does not exclude a configuration in which the disposition of each of the above-described mechanisms is other than that of FIG. 19.

In FIG. 19, the force control mechanism 510 having the drive function is disposed in the third joint portion 4053, and the load measurement mechanism 520 is disposed in the base portion (the first joint portion 4051 or the vicinity thereof, for example) of the operating machine 400. In addition, in FIG. 19, the force control mechanism 510 may be realized by using only the drive function of the SEA 500 or may be an actuator capable of highly accurate drive control, that is different from the SEA 500. In FIG. 19, the load measurement mechanism 520 is, for example, a force sensor and measures a load acting on the first joint portion 4051.

In this way, the smaller and lighter force control mechanism 510 can be attached to the distal end part of the operating machine 400. In addition, by disposing the force sensor, which is smaller and lighter than the SEA 500 or the like, at the base portion of the operating machine 400, the control of the reaction force Fo based on the measured load can be reflected on the force control mechanism 510 and each of the joint portions 4051, 4052, and 4053 of the operating machine 400 more easily.

### 5-2. Correction Example of Driving Direction and Driving Amount of Distal End Part of Operating machine 400

Subsequently, a correction example of (the direction and amount of) driving of the distal end part of the operating machine 400 will be explained with reference to FIG. 20. FIG. 20 is a block diagram illustrating a correction example of driving of the distal end part of the operating machine 400 by the control portion 602.

First, the control portion 602 estimates the reaction force Fo acting on the distal end part of the operating machine 400 on the basis of the load measurement function of the force control mechanism 510 or the detection result of the load measurement mechanism 520.

In a differentiator 6021, the control portion 602 calculates a difference value Δ F = (Fd - Fo) of the reaction force Fo with respect to the target reaction force Fd.

In a dead filter 6022, if a difference value ΔF is within a predetermined range (that is, a dead zone), the control portion 602 stops drive correction of the distal end part of the operating machine 400, or in other words, sets a correction value Pm to the driving direction and the driving amount of the distal end part of the operating machine 400 to 0. Note that the dead zone includes 0, and a numerical width of the dead zone (that is, the difference between a lower limit value and an upper limit value) is sufficiently smaller than the reaction force Fo and the target reaction force Fd. In this way, repetition of minute increase and decrease of the reaction force Fo in the vicinity of the target reaction force Fd can be prevented. In other words, it is possible to prevent oscillatory increase and decrease of the correction value Pm (a state in which the correction value Pm repeats increase and decrease with 0 interposed therebetween, for example). Therefore, the reaction force Fo can easily converge to the target reaction force Fd. In other words, the correction value Pm can easily converge to 0.

On the other hand, in the dead filter 6022, if the difference value ΔF is outside the dead zone, the control portion 602 outputs the difference value ΔF to an amplification portion 6023.

In the amplification portion 6023, the control portion 602 amplifies the difference value ΔF with a predetermined gain and outputs an amplification value Pg to a band-pass filter 6024.

In the band-pass filter 6024, when the amplification value Pg is a positive value and is larger than a predetermined value Pu (> 0), the control portion 602 outputs the predetermined value Pu to an adder 6025. In addition, if the amplification value Pg is a negative value and smaller than the predetermined value Pd (< 0), the control portion 602 outputs the predetermined value Pd to the adder 6025. The band-pass filter 6024 can prevent the output value of the adder 6025 from excessively deviating from its target value.

On the other hand, in the band-pass filter 6024, if the amplification value Pg is equal to or larger than the predetermined value Pd and equal to or smaller than the predetermined value Pu, the control portion 602 outputs the amplification value Pg to the adder 6025.

Furthermore, in the adder 6025, the control portion 602 adds a latest previous correction value Pma output from a delay circuit 6026 to the output value of the adder 6025 so as to obtain the correction value Pm. By executing the above-described processing in the adder 6025, a target position of the distal end part of the operating machine 400 can be corrected.

As a result, the control portion 602 brings the reaction force Fo acting on the distal end part closer to the target reaction force Fd.

The control portion 602 corrects the operation (that is, the driving direction and the driving amount) of the distal end part of the operating machine 400 corresponding to the operation input on the basis of the correction value Pm.

### 5-3. Exemplification of Control Mode

The control portion 602 can execute the reaction force control in a plurality of control modes. The plurality of control modes include a lifting assist mode and a reaction-force assist mode.

In the lifting assist mode, the target reaction force Fd is set to a certain value (for example, Fd = 0).

In addition, when the reaction force Fo having a magnitude outside the dead zone acts on the distal end part of the operating machine 400, the distal end part of the operating machine 400 is driven in a direction in which the magnitude (= IFol) of the reaction force Fo becomes smaller. As a result, even without operating the operating machine 400 by the operation portion 301, the distal end part of the operating machine 400 can be driven in the above-described direction by causing the reaction force Fo having a magnitude outside the dead zone to act in a desired direction.

In the reaction-force assist mode, the magnitude of the target reaction force Fd is set to a predetermined value (|Fd|≠ 0)). In addition, the operation and the drive force of the distal end part of the operating machine 400 are limited by the magnitude of the target reaction force Fd. In this way, the drive (movement) range and the drive force of the distal end part of the operating machine 400 can be limited and thus, it is possible to suppress or prevent the risk of damage to the object and/or the operating machine 400 due to contact with the object.

The control mode is switched by, for example, an operation input in the operation portion 301 or an operation input of a remote controller (not shown) for the control portion 602. The operation portion 301 and the remote controller transmit an output signal indicating a control mode corresponding to the received operation input to the control portion 602.

### 5-3-1. Switching Example of Control Mode

FIG. 21 is a flowchart illustrating a switching example of a control mode. Note that FIG. 21 exemplifies processing of setting the control mode to either one of the lifting assist mode and the reaction-force assist mode.

First, when the control portion 602 receives a selection signal of the control mode (Step S101), it is determined whether or not the output signal indicates the reaction-force assist mode (Step S102).

If it is the output signal indicating the reaction-force assist mode (YES at Step S102), the control portion 602 sets the control mode to the reaction-force assist mode (Step S103). On the other hand, if it is not the signal indicating the reaction-force assist mode (NO at Step S102), the control portion 602 sets the control mode to the lifting assist mode (Step S104).

Then, the control portion 602 executes the control mode set at the immediately preceding step (that is, S103 or S104) (Step S105).

Thereafter, when the control portion 602 receives the selection signal of the control mode again (Yes at Step S106), the processing returns to Step S102.

Note that the processing of FIG. 21 is started, when the control portion 602 receives an output signal indicating the reaction-force assist mode, for example, and is finished in response to stop of the excavator 100, reception of a stop signal output from the operation portion 301, a remote controller, or the like.

### 5-3-2. Use Example of Control Mode

Subsequently, first to fifth use examples of the control mode will be explained.

### First Use Example

Conventionally, when a lifting work is performed by a work machine such as the excavator 100, a distal end part of the operating machine 400 is operated by the operation portion 301 or a remote controller. In this case, it is necessary for a worker other than the operator to manually guide the target lifted at the distal end part (the hoisting attachment 404, for example) of the operating machine 400 by a wire or the like within a range in which the wire can move. This is because it is difficult for the operator to grasp the direction and magnitude of the reaction force Fo acting on the distal end part of the operating machine 400, and when being grounded, for example, there is a risk that a large load is applied to the target being lifted, and the target may be damaged.

Furthermore, at this time, communication between the operator and the worker who guides the target at the distal end part of the operating machine 400 is also important. For example, if the operator drives the operating machine 400 before the worker is sufficiently notified of the intention of the operator, a contact accident may occur between the distal end part (the hoisting attachment 404 or the like) of the operating machine 400 as well as the lifted target and the worker.

In order to solve the above-described risk, the excavator 100 according to the fifth embodiment can guide the distal end part and the target even without the remote control by causing an appropriate reaction force Fo to act on the distal end part of the operating machine 400 by using the lifting assist mode. In other words, only by manually applying a load to the distal end part or the target, the distal end part of the operating machine 400 and the target are moved in the direction in which the load is applied, while maintaining the reaction force Fo corresponding to the load. That is, the operation of the operating machine 400 is made possible by manual guidance of the worker. As a result, a work which has conventionally required three persons, that is, an operator, a worker who guides the target, and a supervisor who sends instructions to both of them, for example, can be performed by one person.

### Second Use Example

Conventionally, when a U-shaped gutter is to be laid, the U-shaped groove is lifted by a work machine such as the excavator 100. Note that, the U-shaped gutter is a cement molded product having a U-shaped cross section and is used by being buried in the ground surface for the purpose of drainage or the like. A worker needed to lay the U-shaped gutter by manually guiding the U-shaped gutter to be grounded on the ground and by pressing the U-shaped gutter to be newly laid against an end part of the existing U-shaped gutter. In the pressing work against the ground and the end part of the existing U-shaped gutter, it is difficult for the operator to grasp the direction and magnitude of the reaction force Fo acting on the distal end part of the operating machine 400. In addition, there is a risk that the U-shaped gutter to be newly laid is damaged due to a large load.

In order to solve these problems, the excavator 100 of the fifth embodiment can rigidly attach a U-shaped gutter to be newly laid to the distal end part of the operating machine 400 and execute the reaction force control in the reaction-force limiting mode, for example, thereby pressing the U-shaped gutter against the ground or the end part of the existing U-shaped gutter with a certain force at such a degree that does not cause damage to the U-shaped gutter. That is, even if there is no worker for guiding, the U-shaped gutter can be laid by the operation of the operating machine 400 by using the reaction-force limiting mode. Therefore, the work can be performed by a smaller number of workers.

Furthermore, the reaction force control can be executed by changing the condition of the reaction-force limiting mode for each three-dimensional coordinate (that is, three-dimensional position) of the distal end part of the operating machine 400 or the target (here, the U-shaped gutter). For example, the target reaction force Fd of the reaction force control, the limit values (the predetermined values Pu and Pd, for example) of the band-pass filter 6024 and the like can be arbitrarily changed between at the time of the pressing work against the ground and at the time of the pressing work against the end part of the existing U-shaped gutter. Furthermore, since ON/OFF switching of the reaction force control can be arbitrarily performed, it is also possible to continuously perform the laying work of the U-shaped gutter by turning ON the reaction force control after grooving for laying of the U-shaped gutter is performed by turning OFF the reaction force control. As a result, not only the number of workers who lay the U-shaped gutter can be reduced, but also a person does not enter the work area. Therefore, safety of the laying work can be improved.

### Third Use Example

Conventionally, in laying of an interior panel of a tunnel, an ALC panel and the like, it is necessary to abut the panel to be laid against an end part of a surrounding panel or a bracket, while pressing the panel against a wall surface. In the work machine such as the excavator 100, it is difficult for the operator to grasp the direction and magnitude of the reaction force Fo acting on the distal end part of the operating machine 400, when the panel to be laid is pressed and abutted. Thus, application of a large load to a panel to be newly laid and an existing panel might damage them. Therefore, conventionally, the worker needed to manually guide the panel as in the first use example.

In order to solve the above-described problem, in the excavator 100 according to the fifth embodiment, by the reaction force control in the reaction-force limiting mode, it is possible to press the panel to be laid against the wall surface with a certain force or to abut the panel against the end part of the existing panel without the risk of damage. Furthermore, since detection of the contact with the end part of the existing panel and the bracket can be performed, even if the panel to be laid is breakable, the panel can be softly brought into contact without abutting.

### Fourth Use Example

Conventionally, in a work machine such as the excavator 100, an attachment can be attached to the bucket 403, or the bucket 403 can be replaced with another attachment. For example, an attachment for mowing can be mounted on or replaced with the distal end part of the operating machine 400.

When the excavator 100 uses the mowing attachment to perform mowing, the mowing attachment needs to be pressed against the ground with a certain force in parallel with the ground. Thus, it is difficult to perform the mowing operation with the excavator 100 using the mowing attachment.

In addition, for example, according to the Ministry of Land, Infrastructure and Transport, a traveling mowing machine shall be used on a slope having a gradient of 1:1.9 or less, and mowing on a slope having a steeper gradient shall be performed by a worker wearing the mowing machine.

On the contrary, in the excavator 100 according to the fifth embodiment, the reaction force Fo acting on the distal end part of the operating machine 400 or the mowing attachment attached to the distal end part is controlled in the reaction-force limiting mode so that the mowing operation as described above can be easily performed. Furthermore, the target reaction force Fd and the limit values of the band-pass filters (the predetermined values Pu and Pd, for example) can be appropriately adjusted at the work site in accordance with the state of the ground or the like by an adjustment dial or the like of the controller. Therefore, the mowing work can be performed under more suitable conditions according to the work situation. Furthermore, even in a mowing work on a steep ground surface on which a conventional mower cannot travel, by extending the operating machine 400 from a flat ground surface, the mowing attachment at the distal end part of the operating machine 400 can be pressed against the steep ground surface in parallel with a certain force. That is, the excavator 100 of the fifth embodiment can easily perform the mowing work even on a steep ground on which a worker has conventionally performed the mowing work directly.

Furthermore, by disposing a plurality of the load measurement mechanisms 520 or the load measurement mechanisms 520 capable of measuring a torque or the like around different axes between the mowing attachment and the distal end part of the operating machine 400, the size of the contact area of the mowing attachment with respect to the ground can be also measured. As a result, the attitude of the mowing attachment and the pressing efficiency to the ground can be accurately adjusted. Therefore, the excavator 100 can appropriately perform the mowing work even on a steep slope which cannot be worked by a conventional traveling mower.

### Fifth Use Example

Conventionally, snow removing on a roof is a dangerous work which is manually performed by a worker who climbs on the roof. However, when a person cannot climb on the roof, a work machine such as the excavator 100 extends the boom 401 and the arm 402 of the operating machine 400 so as to scrape down the snow accumulated on the roof. However, at this time, it is difficult for the operator to grasp the force applied to the roof by the distal end part of the operating machine 400 (in other words, the direction and magnitude of the reaction force Fo, which is a differential reaction-like force thereof). Therefore, in combination with the fact that the visibility is likely to be deteriorated, there is a risk that an accident such as breaking through the roof with the bucket may occur.

In order to solve this risk, in the excavator 100 of the fifth embodiment, by means of the reaction force control in the control mode, the snow removal can be performed by causing the distal end of the bucket 403 to follow the roof surface to such a degree that the roof is not damaged. Furthermore, at this time, by changing the tooth (tooths) at the distal end of the bucket 403 to a soft material such as a resin, the excavator 100 can perform the snow-removing work on the roofs made of various materials without damage.

### 6. Sixth Embodiment

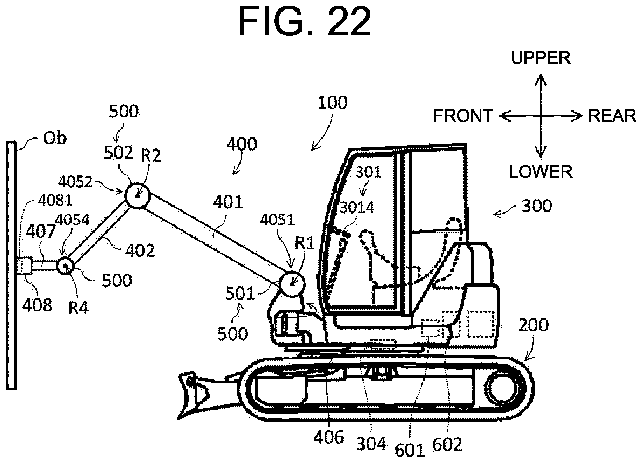

Subsequently, a sixth embodiment will be explained with reference to FIG. 22. FIG. 22 is a left side view illustrating a configuration example of the excavator 100 according to the sixth embodiment. In the sixth embodiment, a configuration different from those of the first embodiment to the fifth embodiment and the variations thereof will be explained. In addition, in the sixth embodiment, the same signs are given to the components similar to those of the first embodiment to the fifth embodiment and the variations thereof, and the description thereof may be omitted in some cases. In addition, the sixth embodiment can be arbitrarily combined with the first embodiment to the fifth embodiment and the variations thereof as long as no contradiction occurs.

In the excavator 100 of the sixth embodiment, instead of the bucket 403, an attachment 407 is attached to the distal end part of the operating machine 400. In addition, the SEA 500 is disposed in each of the joint portions 405 of the operating machine 400. For example, the SEA 500 is disposed also at a joint portion 4054 between the distal end part of the arm 402 and the base end part of the attachment 407.

The attachment 407 holds an object so as to be capable of conveyance. The attachment 407 has a rod shape in FIG. 22 but is not limited to this exemplification and may be a member such as a robot hand, capable of grasping the object Ob.

In addition, a surface adjustment member 408 is disposed at the distal end part of the attachment 407. When holding the object Ob, the attachment 407 is abutted against the surface of the object Ob via the surface adjustment member 408.

The distal end part of the surface adjustment member 408 is swingable in a yaw direction and a pitch direction with respect to a part on the attachment 407 side and is more preferably swingable also in a roll direction.

In this way, when the object Ob is held by the attachment 407, the attachment 407 can be abutted against the object Ob without applying an impact or an excessive load to the object Ob and the attachment 407 by the swing of the distal end part of the surface adjustment member 408. Furthermore, even if the reaction force control (see the fifth embodiment) or the like is not executed, the distal end surface of the surface adjustment member 408 can be easily made to follow the surface of the object Ob. Therefore, the attachment 407 can hold the object Ob more easily.

For at least the distal end part of the surface adjustment member 408, an elastic member such as a spring coil, rubber or the like, an elastically deformable porous body such as a high-repulsion sponge, a low-repulsion sponge or the like, and elastic deformation such as bellows or the like can be adopted. Alternatively, a joint member such as a ball joint may be adopted for the surface adjustment member 408. In the joint member, connection is made so that the other end part is swingable in the yaw direction and the pitch direction (and the roll direction) with respect to a one end part. In this way, the one end of the surface adjustment member 408 is passively and easily matched by its constitution by following the surface of the object Ob.

Preferably, the surface adjustment member 408 includes a suction member 4081. The suction member 4081 is disposed on the distal end surface of the surface adjustment member 408. The suction member 4081 may be a sucker or a member capable of vacuum suction such as a vacuum suction pad or a vacuum chuck. In this way, when the surface adjustment member 408 is abutted against the object Ob, the distal end part of the surface adjustment member 408 can be connected to the surface of the object Ob by the suction member 4081. Therefore, the attachment 407 can hold the object Ob more easily. However, this exemplification does not exclude a configuration in which the surface adjustment member 408 does not have the suction member 4081.

Note that, in the exemplification of FIG. 22, the rotation axes R of the respective joint portions 405 extend in the same direction. For example, the rotation axis R1 of the first joint portion 4051 and the boom SEA 501, the rotation axis R2 of the second joint portion 4052 and the arm SEA 502, and the rotation axis R4 of the joint portion 4054 and the SEA 500 disposed on the joint portion 4054 are all parallel to each other. However, the exemplification of FIG. 22 is not limiting, and the rotation axis R of some of the joint portions 405 does not have to be parallel to the rotation axis R of the others joint portions 405.

For example, in FIG. 22, the rotation axes R1, R2, and R4 may extend in directions orthogonal to each other. Specifically, one axis of the rotation axes R1, R2, and R4 may extend in the right-left direction, and the joint portion 405 having the one axis as the rotational axis R may be rotatable in the pitch direction. Furthermore, the other one axis may extend in the up-down direction, and the joint portion 405 having the one axis as the rotation axis R may be capable of rotational movement in the yaw direction. In addition, the remaining one axis may extend in the front-rear direction, and the joint portion 405 having the one axis as the rotation axis R may be rotatable in the roll direction. In this way, the operating machine 400 can be used as a multi-joint robot arm.

In addition, in the fifth embodiment and the sixth embodiment, the configuration and the control described above are applied to the operating machine 400 on which the SEA 500 is mounted. However, this exemplification is not limiting, and the configuration and the control described above can be applied also to an operating machine including a hydraulic actuator.

### 7. Remarks

The embodiments of the present invention have been described above. Note that, it should be understood by those skilled in the art that the above-described embodiments are merely exemplifications, and various variations are possible for the combination of the respective constituent elements and the respective processing, which are within the scope of the present invention.

For example, in the present disclosure, the operating machine 400 has three joint portions 405. However, this exemplification is not limiting, and the number of joint portions 405 of the operating machine 400 may be plural other than 3.

### 8. Overview

Hereinafter, the above-described embodiments will be comprehensively described.

For example, the drive device 500 disclosed in this specification is
the drive device 500 that rotationally moves a drive target M2, including
the motor portion 1,
the speed reducer 2 that reduces a torque input from the motor portion 1, and
the buffer device 3 that outputs the torque input from the speed reducer 2 from the output end part 32 to the drive target M2 via the elastic portion 33, in which
at least a part of the buffer device 3 is configured to be disposed on a side opposite to the motor portion 1 and the speed reducer 2 with the drive target M2 interposed therebetween (first configuration).

The drive device 500 of the above-described first configuration may be configured such that
a part of the buffer device 3 is configured to be disposed inside the through hole Mh disposed in the drive target M2 (second configuration).

In addition, the drive device 500 disclosed in this specification is
the drive device 500 that rotationally moves the drive target M2, including
the motor portion 1,
the speed reducer 2 that reduces a torque input from the motor portion 1, and
the buffer device 3 that outputs the torque input from the speed reducer 2 from the output end part 32 to the drive target M2 via the elastic portion 33, in which
the buffer device 3 is configured to be disposed inside the through hole Mh disposed in the drive target M2 (third configuration).

The drive device 500 according to any one of the above-described first to third drive devices may be configured such that
the output shaft 22 of the speed reducer 2 is connected to the buffer device 3 through the through hole Mh disposed in the drive target M2, and
the output end part 32 of the buffer device 3 is connected to the drive target M2 (fourth configuration).

In addition, the drive device 500 disclosed in this specification is
the drive device 500 that rotationally moves the drive target M2, configured to include
the motor portion 1,
the buffer device 3 that outputs a torque of the motor portion 1 from the output end part 32 via the elastic portion 33, and
the first speed reducer 2 that reduces the torque input from the buffer device 3, in which
the buffer device 3 is disposed between the motor portion 1 and the first speed reducer 2,
the output end part 32 of the buffer device 3 is connected to the first speed reducer 2, and
the first output shaft 22 of the first speed reducer 2 is connected to the drive target M2 (fifth configuration).

In addition, the drive device 500 of the above-described fifth configuration may be configured to include
a second speed reducer 5 that is disposed between the motor portion 1 and the buffer device 3 and reduces a torque input from the motor portion 1, in which
a second output shaft 52 of the second speed reducer 5 is connected to the buffer device 3 (sixth configuration).

The drive device 500 of any one of the above-described first to fifth configurations may further include
a sensor 4 that detects a relative phase of the input end part 31 of the buffer device 3 and the output end part 32 of the buffer device 3 (seventh configuration).

In addition, the drive device 500 of the above-described seventh configuration may be configured such that
the input end part 31 and the output end part 32 are capable of rotational movement around a rotation axis R of the drive target M2, and
the sensor 4 detects a relative phase (a rotation angle difference, for example) of the other to one of the input end part 31 and the output end part 32 to the other (eighth configuration).

In addition, the above-described seventh or eighth drive device 500 may be configured such that
the input end part 31 and the output end part 32 are capable of rotational movement around a rotation axis R of the drive target M2, and
the sensor 4 includes
a first sensor 41 that detects a first phase (a rotation angle, for example) of the input end part 31, and
a second sensor 42 that detects a second phase (a rotation angle, for example) of the output end part 32 (ninth configuration).

In addition, the drive device 500 according to any one of the above-described seventh to ninth drive devices may be configured such that
at least a part of the sensor 4 is disposed in the through hole Mh of the drive target M2 (tenth configuration).

In addition, the above-described fifth or sixth drive device 500 may be configured to further include
a sensor 4 for detecting a relative phase of the input end part 31 of the buffer device 3 and the output end part 32 of the buffer device 3, in which
the input end part 31 and the output end part 32 of the buffer device 3 are capable of rotational movement around a rotation axis R of the drive target M2, and
the sensor 4 has
a third sensor 43 that detects a third phase (a rotation angle, for example) of a motor output shaft 11 of the motor portion 1, and
a fourth sensor 44 that detects a fourth phase (a rotation angle, for example) of either one of a first input shaft 21 and the first output shaft 22 of the first speed reducer 2 (eleventh configuration).

In addition, the above-described drive device 500 of the fifth or sixth drive device 500 may be configured to further include
a sensor 4 for detecting a relative phase of an input end part 31 of the buffer device 3 and the output end part 32 of the buffer device 3, in which
the input end part 31 and the output end part 32 are capable of rotational movement around a rotation axis R of the drive target M2, and the sensor 4 has
a first rotation-transmission member 471 that transmits rotation of a motor output shaft 11 of the motor portion 1 outward in a radial direction from between the motor portion 1 and the buffer device 3,
a second rotation-transmission member 472 that transmits rotation of at least any one of the output end part 32 of the buffer device 3, the first input shaft 21 of the first speed reducer 2, and the first output shaft 22 of the first speed reducer 2 outward in the radial direction from between the buffer device 3 and the drive target M2,
a fifth sensor 45 that detects a fifth phase (a rotation angle, for example) of the first rotation-transmission member 471, and
a sixth sensor 46 that detects a sixth phase (a rotation angle, for example) of the second rotation-transmission member 472 (twelfth configuration).

In addition, the work machine 100 disclosed in this specification is configured to include
any one of the above-described first, third and fifth drive devices 500 (thirteenth configuration).

In addition, the above-described thirteenth work machine 100 may be configured to further include
an operating machine 400 which has a joint portion 405 and is swingably attached to a base 303, and
a control portion 602 that controls drive of the operating machine 400 and the drive device 500, in which
the drive device 500 is disposed on the joint portion 405 and drives the joint portion 405, and
the control portion 602 estimates a reaction force Fo acting on a distal end part of the operating machine 400 on the basis of detection results of load detection portions 4, 6, 520 for detecting a load acting on the joint portion 405 (fourteenth configuration).

In addition, the above-described fourteenth work machine 100 may be configured such that
the control portion 602 controls the drive of the operating machine 400 and the drive device 500 on the basis of the reaction force Fo and a target reaction force Fd (fifteenth configuration).

In addition, the above-described fifteenth work machine 100 may be configured to further include
an operation portion 301 that receives an operation input, and
a storage portion 601 that stores the target reaction force Fd, in which
the target reaction force Fd is set on the basis of the operation input (sixteenth configuration).

In addition, the above-described fifteenth or sixteenth work machine 100 may be configured such that
the control portion 602
corrects drive of the operating machine 400 and the drive device 500 on the basis of the reaction force Fo, when a magnitude (corresponding to IPgl) of a difference value ΔF of the reaction force Fo with respect to the target reaction force Fd is less than a predetermined value (corresponding to IPul, |Pd|) and
corrects the drive of the operating machine 400 and the drive device 500 on the basis of the predetermined value (corresponding to |Pu|, |Pd|), when the magnitude (corresponding to |Pg|) of the difference value ΔF is equal to or larger than the predetermined value (corresponding to |Pu|, |Pd|) (seventeenth configuration).

In addition, any one of the above-described fifteenth to seventeenth work machines 100 may be configured such that
the control portion 602
corrects drive of a distal end part of the operating machine 400 on the basis of a difference value ΔF, when the difference value ΔF of the reaction force Fo with respect to the target reaction force Fd is out of a predetermined range (corresponding to a dead zone in the dead filter 6023 of FIG. 20) (eighteenth configuration).

### REFERENCE SIGNS LIST

100 Excavator
200 Lower traveling body
201 Crawler
202 Traveling motor
300 Upper revolving body
301 Operation portion
3011 Operation seat
3012 Work operation lever
3013 Traveling lever
3014 Operation panel
302 Motor
303 Revolving base (base)
304 Revolving motor
400 Operating machine
401 Boom
402 Arm
403 Bucket
404 Hoisting attachment
405 Joint portion
4051 First joint portion
4052 Second joint portion
4053 Third joint portion
4054 Joint portion
406 Connection portion
407 Attachment
408 Surface adjustment member
500 SEA (drive device)
501 Boom SEA
502 Arm SEA
503 Bucket SEA
510 Force control mechanism
520 Load measurement mechanism (load detection portion)
601 Storage portion
602 Control portion
6021 Differentiator
6022 Dead filter
6023 Amplifier
6024 Band-pass filter
6025 Adder
6026 Delay circuit
1 Motor portion
11 Motor output shaft
2, 5 Speed reducer
21, 51 Input shaft
22, 52 Output shaft
23 Gear mechanism
3 Buffer device
31 Input end part
32 Output end part
33, 331, 332, 333, 334 Elastic portion
34 Elastic member
341 Passage
35 Stopper
351 First stopper
3511 First base body
3512 First restraining portion
3513 First passage
352 Second stopper
3521 Second base body
3522 Second restraining portion
3523 Second passage
353 Groove
4 Sensor (load detection portion)
41 First sensor
42 Second sensor
43 Third sensor
44 Fourth sensor
45 Fifth sensor
46 Sixth sensor
471 First rotation-transmission member
472 Second rotation-transmission member
5 Speed reducer
51 Input shaft
52 Output shaft
6 Displacement sensor (load detection portion)
61 Wiring
M1 First member
M2 Second member
Mh Through hole
R, R1, R2, R3, R4 Rotation axis

## Claims

1. A drive device that rotationally moves a drive target, comprising:
a motor portion;
a speed reducer that reduces a torque input from the motor portion; and
a buffer device that outputs the torque input from the speed reducer from an output end part to the drive target via an elastic portion, wherein
at least a part of the buffer device is disposed on a side opposite to the motor portion and the speed reducer with the drive target interposed therebetween.

2. The drive device according to claim 1, wherein a part of the buffer device is disposed inside a through hole disposed in the drive target.

3. A drive device that rotationally moves a drive target, comprising:
a motor portion;
a speed reducer that reduces a torque input from the motor portion; and
a buffer device that outputs the torque input from the speed reducer from an output end part to the drive target via an elastic portion, wherein
the buffer device is disposed inside a through hole disposed in the drive target.

4. The drive device according to claim 1, wherein an output shaft of the speed reducer is connected to the buffer device through a through hole disposed in the drive target; and
the output end part of the buffer device is connected to the drive target.

5. A drive device that rotationally moves a drive target, comprising:
a motor portion;
a buffer device that outputs a torque of the motor portion from an output end part via an elastic portion; and
a first speed reducer that reduces the torque input from the buffer device, wherein
the buffer device is disposed between the motor portion and the first speed reducer;
the output end part of the buffer device is connected to the first speed reducer; and
a first output shaft of the first speed reducer is connected to the drive target.

6. The drive device according to claim 5, comprising a second speed reducer that is disposed between the motor portion and the buffer device and reduces a torque input from the motor portion, wherein
a second output shaft of the second speed reducer is connected to the buffer device.

7. The drive device according to any one of claims 1 to 6, further comprising a sensor for detecting a relative phase of an input end part of the buffer device and the output end part of the buffer device.

8. The drive device according to claim 7, wherein the input end part and the output end part are capable of rotational movement around a rotation axis of the drive target; and
the sensor detects a relative phase of the other to one of the input end part and the output end part.

9. The drive device according to claim 7, wherein the input end part and the output end part are capable of rotational movement around a rotation axis of the drive target; and
the sensor has:
a first sensor that detects a first phase of the input end part; and
a second sensor that detects a second phase of the output end part.

10. The drive device according to claim 7, wherein at least a part of the sensor is disposed in the through hole of the drive target.

11. The drive device according to claim 5, further comprising a sensor for detecting a relative phase of an input end part of the buffer device and the output end part of the buffer device, wherein
the input end part and the output end part are capable of rotational movement around a rotation axis of the drive target; and
the sensor has:
a third sensor that detects a third phase of a motor output shaft of the motor portion; and
a fourth sensor that detects a fourth phase of either one of a first input shaft and the first output shaft of the first speed reducer.

12. The drive device according to claim 5, further comprising: a sensor for detecting a relative phase of an input end part of the buffer device and the output end part of the buffer device, wherein
the input end part and the output end part are capable of rotational movement around a rotation axis of the drive target; and
the sensor includes:
a first rotation-transmission member that transmits rotation of a motor output shaft of the motor portion outward in a radial direction from between the motor portion and the buffer device;
a second rotation-transmission member that transmits rotation of at least any one of the output end part of the buffer device, a first input shaft of the first speed reducer, and the first output shaft of the first speed reducer outward in the radial direction from between the buffer device and the drive target;
a fifth sensor that detects a fifth phase of the first rotation-transmission member; and
a sixth sensor that detects a sixth phase of the second rotation-transmission member.

13. A work machine comprising the drive device according to any one of claims 1, 3 and 5.

14. The work machine according to claim 13, further comprising an operating machine that has a joint portion and is swingably attached to a base; and
a control portion that controls drive of the operating machine and the drive device, wherein
the drive device is disposed on the joint portion and drives the joint portion; and
the control portion estimates a reaction force acting on a distal end part of the operating machine on the basis of a detection result of a load detection portion for detecting a load acting on the joint portion.

15. The work machine according to claim 14, wherein the control portion controls drive of the operating machine and the drive device on the basis of the reaction force and a target reaction force.

16. The work machine according to claim 15, further comprising: an operation portion that receives an operation input; and
a storage portion that stores the target reaction force, wherein
the target reaction force is set on the basis of the operation input.

17. The work machine according to claim 15, wherein the control portion
corrects drive of the operating machine and the drive device on the basis of the reaction force, when a magnitude of a difference value of the reaction force with respect to the target reaction force is less than a predetermined value; and
corrects the drive of the operating machine and the drive device on the basis of the predetermined value, when the magnitude of the difference value is equal to or larger than the predetermined value.

18. The work machine according to claim 15, wherein, when a difference value of the reaction force with respect to the target reaction force is out of a predetermined range, the control portion
corrects drive of the distal end part of the operating machine on the basis of the difference value.
